# EUROPEAN PATENT APPLICATION

(11) **EP 4 417 293 A1**
(43) Date of publication of application: **21.08.2024**
(21) Application number: 23156666.2
(22) Date of filing: 14.02.2023
(51) Int. Cl.: B01D 46/24, B01D 46/52

(54) **FILTER ELEMENTS AND RELATED FILTER ASSEMBLY**

(71) Applicant: DONALDSON COMPANY, INC., Minneapolis, MN 55440-1299 (US)
(72) Inventor: CATOOR, Bart, Bloomington, 55431 (US); VERSTRAETE, Mathijs, Bloomington, 55431 (US)
(74) Representative: IPLodge bv

(57) **Abstract**

The present disclosure relates to a filter element comprising a flexible filter media pack arranged in a tubular manner around an axis, a first open end cap connected to a first axial end of the filter media pack in a fluid tight manner, and a second open end cap connected to a second axial end of the filter media pack in a fluid tight manner, wherein the second open end cap comprises a central opening and a second circumferential seal comprising a radially inwardly into the central opening extending portion of the second end cap, the radially inwardly extending portion comprising at least one circumferential groove, trench or recess arranged adjacent to the central opening, the groove, trench or recess projecting into an inner volume of the filter media pack; and related filter assembly.

## Description

### Field of the disclosure

The present disclosure relates to the field of gas filtration, such as for instance air filtration. It relates to the field of filter elements and assemblies comprising a filter element which is arranged in a filter housing in a sealing manner, such that air passing from an inlet of the housing to an outlet of the housing is filtered by the filter element. Preferably the assemblies are used for filtering air that is afterwards directed to an engine of for instance a vehicle.

### Background

Filter elements, also named filter cartridges, are used for a wide variety of filtering applications and the fluid to be filtered can be a liquid or a gas, e.g. air.

Indeed, in many instances, it is desired to filter contaminant material from a fluid stream. For example, airflow streams to engines for motorized vehicles or for power generation equipment, construction equipment or other equipment, gas streams to gas turbine systems and air streams to various combustion furnaces, carry particulate contaminant therein. It is preferred for such systems that contaminant materials be removed from the fluid or at least be reduced.

Filter elements comprise filter media for removing contaminant materials when the fluid flows through the filter media. Commonly used and commercially available filter media are for example pleated media or fluted media. When the filter media is loaded with dust and/or particles above a certain threshold load, a filter element needs to be replaced. Filter elements are typically installed in the housing in a replaceable manner.

There is a need in industry for new solutions which allow an easy installation of a correct filter element in a filter housing, especially complex filter housing designs, and which would not allow the installation of a wrong filter element. Complex filter housing designs can for instance be a results of boundary conditions imposed by the geometry and positioning of other vehicle/engine components.

There is also a need in industry for compact packaging of filter elements and filter housings.

And there is a need in industry for filter elements that have an increased ratio of filter media volume over internal housing volume.

Further, solutions that reduce filter element weight and amount of used material are appreciated in industry.

Also, there exists a need for filter housings and assemblies that allow an easy removal of a housing cover, and that facilitate a correct positioning of the housing cover on a housing.

It is generally important to install correct filter elements, in a correct manner, for a certain filter housing in order to avoid damage to the equipment or engine which makes use of the filtered air/gas.

There is also a need in industry for filter assemblies that allow an installed filter element to be inspected from the inside without the need to remove the element.

There is also a need in industry for filter assemblies that allow inspection of an installed filter element with a reduced risk of breaking the sealing of the filter element towards the main housing.

### Summary

It is an object of embodiments of the present disclosure to provide a filter element according to claim 1, and an assembly comprising such filter element.

The present invention is defined in the appended independent claims. The dependent claims define advantageous embodiments.

In a first aspect of the present disclosure a filter element is disclosed comprising a flexible filter media pack arranged in a tubular manner around an axis, a first open end cap connected to a first axial end of the filter media pack in a fluid tight manner, and a second open end cap connected to a second axial end of the filter media pack in a fluid tight manner, wherein the first end cap is flexible and can non-destructively be deformed, for instance between a first shape (or state) (corresponding to a first configuration of the element) and a different, preferably substantially different, second shape (or state) (corresponding to a second configuration of the element).

It is an advantage that filter housings can be designed that allow for the installation of the disclosed filter element but that do not allow installation of standard filter elements, avoiding the use of a wrong filter element or a wrong installation thereof. It is a further advantage that the disclosed filter element can be used in relatively complex and compact housing configurations. Moreover, the disclosed filter element can be packaged in a more compact manner. As at least the first end cap and the filter media can be non-destructively deformed, the filter media can be put in a twisted configuration in use in an associated housing, increasing the ratio of filter media volume over internal housing volume.

For the purpose of the present disclosure, the filter element, end cap or filter media pack can non-destructively be deformed if a deformation of the respective item does not impact the integrity or performance thereof. Preferably the respective item is flexible and even more preferably the respective item is elastically deformable, within the boundaries needed for performing its function, e.g. for being reduced in size in order to enter a service opening of a filter housing which is initially too small or, to shape itself according to a filter housing cavity which has enough volume but which is shaped differently. An item is elastically deformable if it returns to its original undeformed state after having been deformed, within the boundaries of performing its function.

It should be understood that also the filter media pack can be non-destructively deformed while maintaining fluid tight connection with the first and the second end cap. The fluid media pack can for instance comprise a pleated media pack. The sheet material which is pleated to form the pleated media can be single layer or multilayer. It can for instance comprise one, two or more filtration and/or coalescence layers. It may further comprise an inner and/or outer support layer. The composite and pleated media should though remain deformable in a non-destructive manner. Preferably it is flexible. Preferably it is elastically deformable. Preferably, the pleated media is arranged in a tubular manner having pleat direction parallel to a longitudinal filter element axis in at least the first configuration of the element. The end pleats of the pleated media are preferably permanently connected to one another by gluing, (e.g. polyurethane) embedding or other state of the art techniques, preferably without losing filtration capacity for more than a single pleat length. The end pleats are the first and last pleats of a sheet of paper that gets pleated. Preferably, there are no intermediate, axially extending connection structures at each of the end pleats, for connecting the end pleats.

Each of the first and second open end caps of the filter element are preferably made of a single piece. They can for instance be formed by potting, e.g. by polyurethane (PU), e.g. foamed polyurethane potting. Alternatively, they may be manufactured separately and attached in a sealing manner to the first or second end of the media pack by state of the art techniques, e.g. by gluing or potting or injecting. Preferably, the end caps are end disks, such as uninterrupted annular rings.

According to preferred embodiments, a minimal radial cross-dimension of the second shape of the first open end cap is at least 5%, or at least 10%, or at least 15%, or at least 20%, or at least 25%, or at least 30 %, or at least 40%, or at least 50, or at least 75%, smaller than a minimal radial cross-dimension of the first shape.

According to preferred embodiments, a minimal radial cross-dimension of the second shape of the first open end cap is at least 5mm, or at least 10 mm, or at least 15 mm, or at least 20 mm, or at least 25 mm or at least 5 cm smaller than a minimal radial cross-dimension of the first shape of the first open end cap.

According to preferred embodiments, the first end cap is elastically deformable.

It is an advantage that such an endcap automatically returns in its original position, resulting in a corresponding first configuration of the filter element, after the end cap and filter element have been deformed, for instance for inserting or removing the filter element through a small insertion opening of an air cleaner housing or packaging means. In these cases, the first state of the end cap and the first configuration of the filter element is the endcap or filter element in undeformed state, i.e. the state in which it returns without any external forces applied on it.

According to preferred embodiments, the first configuration of the media pack can have a cross-section along a plane perpendicular to the filter element which is circular, rectangular, rounded rectangular, obround, oval or can have other regular shapes.

According to preferred embodiments, the first end cap is connected to the filter media and possibly manufactured by (e.g. polyurethane (PU)) potting.

According to preferred embodiments, the first end cap comprises a first circumferential seal, preferably formed integrally with the first end cap. For instance, the seal can be formed of a polyurethane material, e.g. can comprise the same material as the material of the first end cap. Alternatively, the first circumferential seal can be manufactured separately or in a separate step of the manufacturing process and attached to the first end cap in a sealing manner by state of the art techniques. An alternative embodiment for the first seal is a TPE (Thermoplastic elastomer) seal.

For the purpose to the present disclosure, a (e.g. first or second) circumferential seal (or sealing surface) is a seal (or sealing surface) that makes a circumference or is around a respective opening, such as the central opening or the first or second end cap respectively. Circumferential seals and associated circumferential surfaces cooperate in order to provide an air-tight seal. The orientation of such a circumferential seal or circumferential sealing surface can generally be radially inwardly, radially outwardly or in an axial direction, or a combination thereof. The sealing between the circumferential seal and circumferential sealing surface can generally be radially inwardly directed, radially outwardly directed or axially directed, or a combination thereof.

The first seal is preferably non-destructively deformable, preferably elastically deformable.

According to preferred embodiments, the first circumferential seal comprises an N-fold, for instance a 1-fold rotational symmetry with respect to the filter media pack axis.
It is an advantage that introducing a N-fold rotational symmetry of the first circumferential seal and corresponding sealing surface on a housing cover helps in aligning the filter element with respect to the cover.
For the purpose of the present disclosure, an object or projection is said to have an N-fold rotational symmetry about a rotation axis if the object or projection can be mapped onto itself by N different rotations, of less than or equal to 360°, about that rotation axis. An object or projection having a 1-fold rotational symmetry is an object comprising no rotational symmetry other than 360°.

According to preferred embodiments, the first circumferential seal is arranged along a slanted plane with respect to a plane perpendicular to the filter media pack axis.

According to preferred embodiments, the first end cap can be deformed in a radial direction (for instance for more than 10%) by radial force components which are smaller than 40 N, or smaller than 30 N, or smaller than 20 N or smaller than 10N.

According to preferred embodiments, the first end cap further comprises at least one manipulation means such as a handle, adapted and arranged or pulling a portion of the first end cap radially inwardly.

According to preferred embodiments, the manipulation means comprises a handle bar or structure which is bridging opposite sides of the open end cap over a central opening in the first end cap.

According to preferred embodiments, the manipulation means comprises at least one radially inwardly or outwardly directed flap or ear structure. For instance, it may comprise two radially inwardly directed flaps or ear structures arranged at opposed, e.g. diametrically opposite sides of the central opening.

According to preferred embodiments, the filter media pack is of the cone-type, i.e. arranged in a conical manner, wherein the cross-section of the respective cone is decreasing from the first axial end of the media pack to the second axial end of the media pack, and wherein the second end cap has a smaller outer diameter than the first end cap.
This provided the advantage that a filter media support means such as a tower structure for instance protruding from an inner surface of the housing cover can easily be inserted into the filter media pack. This is even more advantageous if the filter media pack is at least partially to be shaped during installation by the filter media support means or tower.
Preferably, the outer diameter of the second end cap can be more than 5% or more than 10% or more than 15 % or more than 20% or more than 25% or more than 30 % smaller than the outer diameter of the first end cap. Preferably the outer diameter of the second end cap lies within the range of 80% to 90% of the outer diameter of the first end cap.

According to preferred embodiments, the second end cap is flexible and can non-destructively be deformed, for instance between a first shape and a different, preferably substantially different, second shape.

According to preferred embodiments, a minimal radial cross-dimension of the second shape of the second open end cap is at least 5%, or at least 10%, or at least 15%, or at least 20%, or at least 25%, or at least 30 %, or at least 40%, or at least 50, or at least 75%, smaller than a minimal radial cross-dimension of the first shape.

According to preferred embodiments, a minimal radial cross-dimension of the second shape of the second open end cap is at least 5mm, or at least 10 mm, or at least 15 mm, or at least 20 mm, or at least 25 mm or at least 5 cm smaller than a minimal radial cross-dimension of the first shape of the second open end cap.

According to preferred embodiments, the second end cap can be deformed (for instance for more than 10%) in a radial direction by radial force components which are smaller than 40 N, or smaller than 30 N, or smaller than 20 N or smaller than 10N.

According to preferred embodiments, the second end cap is elastically deformable.

It is an advantage that such an endcap automatically returns in its original position, resulting in a corresponding first configuration of the filter element, after the end cap and filter element have been deformed, for instance for inserting or removing the filter element through a small insertion opening of an air cleaner housing or packaging means. This is even more advantageous in combination with an elastically deformable first end cap. In these cases, the first state of the second cap and the first configuration of the filter element is the endcap or filter element in undeformed state, i.e. the state in which it return without any external forces applied on it.

According to preferred embodiments, the second end cap is connected to the filter media and possibly manufactured by (e.g. polyurethane (PU)) potting.

According to alternative preferred embodiments, the second end cap is substantially rigid, and preferably smaller than said first end cap in a first configuration of the filter element.

According to preferred embodiments, the second end cap comprises a second circumferential seal, preferably formed integrally with the second end cap. For instance, the second circumferential seal can be formed of a polyurethane material, e.g. can comprise the same material as the material of the second end cap.

Alternatively, the seal can be manufactured separately or in a separate step of the manufacturing process and attached to the second end cap in a sealing manner by state of the art techniques. An alternative embodiment for the second seal is a TPE (Thermoplastic elastomer) seal.

The second circumferential seal is preferably non-destructively deformable, preferably elastically deformable.

According to preferred embodiments, the second circumferential seal comprises an N-fold, for instance a 1-fold rotational symmetry with respect to the filter media pack axis.
It is an advantage that introducing a N-fold rotational symmetry of the second circumferential seal and corresponding sealing surface on a housing helps in aligning the filter element with respect to the (second end of the) housing.

According to preferred embodiments, the second circumferential seal is arranged along a slanted plane with respect to a plane perpendicular to the filter media pack axis.

According to preferred embodiments, the second open end cap comprises a central opening and the second circumferential seal is embodied as a radially inwardly into the central opening extending portion of the second end cap. The radially inwardly extending portion comprises at least one axially extending circumferential, for instance V- or U- shaped, groove, trench or recess arranged adjacent to the central opening, the groove, trench or recess projecting into an inner volume of the filter media pack, preferably in a direction parallel to the axis of the filter media pack. Preferably, the sealing direction of the second circumferential seal is the radial direction, more preferably radially inward direction.

According to preferred embodiments, the filter media pack comprises pleated media, and the media comprises one or more layers selected from the group of media layers and support layers.

According to preferred embodiments, the filter media pack and /or filter element are self-supporting. According to preferred embodiments, the filter media pack is self-supporting in at least the axial direction.

According to alternative embodiments, the filter media pack and thus filter element is not self-supporting. For instance, it can be such that while positioned vertically on first end cap, the filter media pack and thus filter element deforms due to own weight in the earth's gravity.

In a second aspect of the present disclosure a package is disclosed comprising a box, bag or sleeve comprising a filter element according to any of the embodiments of the first aspect, wherein the filter element is kept in an elastically deformed configuration by an inner sidewall of the box, bag or sleeve.

In a third aspect of the present disclosure a filter assembly is disclosed comprising a filter housing having a housing axis and a filter element according to any of the embodiments of the first aspect, the filter housing comprising a filter insertion opening (often called servicing opening), wherein the filter insertion opening is too small for inserting the first end cap into the filter housing in the first shape of the first end cap (or first configuration of the filter element) and large enough for inserting the first end cap into the filter housing in the second shape of the first end cap (or second configuration of the filter element).

According to preferred embodiments, said insertion opening comprises at least one undercut section and a projection of the filter element along the housing axis intersects a projection of the undercut section along the housing axis, the intersection corresponding to a projected overlap area. The projection can for instance be on a plane perpendicular to the housing axis.

According to preferred embodiments, the projected overlap area is more than 1%, or more than 2%, or more than 3%, or more than 4%, or more than 5% or more than 10%, or more than 20% of the projected area of the filter element along the housing axis. In case of a plurality of undercut sections, the projected overlap area relates to the sum of the individual intersections and associated overlap areas.

According to preferred embodiments, the housing comprises a housing cover for covering the insertion opening, and the housing cover is substantially complementary or complementary shaped with respect to the one or more undercut sections. For instance, the one or more undercut sections can be defined by one or more flats of the insertion opening and the housing cover may have one or more corresponding flats along its sidewall.

According to preferred embodiments, the filter assembly comprises a housing cover for covering the insertion opening, wherein the housing cover and filter housing are adapted such that they meet along a slanted plane, the slanted plane being such that a housing length of the housing at a side corresponding to the partial overlap area is longer than a housing length at an opposed side of the housing.

According to preferred embodiments, the filter assembly comprises a housing cover for covering the insertion opening, the housing cover comprising a filter media pack inner support structure, such as a tower structure, preferably having conical shape, protruding from an inner surface from proximate end at the cover to towards a distal end.

According to preferred embodiments, the filter assembly comprises a housing cover for covering the insertion opening, and the housing cover comprises a sensor mount for a sensor such as a MAF sensor, temperature sensor, pressure sensor, RFID sensor or tag and optionally the respective sensor. It is an advantage that the central area of the filter housing volume below the housing cover is part of the clean air side of the filter housing, allowing the sensor to be placed on the housing cover and to be visually in the line of sight when servicing.

According to preferred embodiments, the filter assembly comprises a housing cover for covering the insertion opening, and the housing cover comprises a sealing surface for receiving the first circumferential seal in a sealing manner when the cover is mounted on the filter housing.

According to preferred embodiments, the filter assembly comprises a housing cover for covering the insertion opening, and the filter housing comprises a first end and a second end, the first end comprising the filter insertion opening and being adapted for receiving the cover, the second end arranged at an opposite end of the first end and comprising an outlet opening, and the second end further comprising a sealing surface complementary to the second circumferential seal, for receiving the second circumferential seal in a sealing manner.

According to preferred embodiments, the filter assembly comprises a housing cover for covering the insertion opening. The second open end cap of the filter element comprises a central opening and the second circumferential seal is embodied as a radially inwardly into the central opening extending portion of the second end cap. The radially inwardly extending portion comprising at least one axially extending circumferential, for instance V- or U-shaped groove, trench or recess arranged adjacent to the central opening, the groove, trench or recess projecting into an inner volume of the filter media pack, preferably in a direction parallel to the axis of the filter media pack. The housing cover comprises a filter media pack inner support structure, such as a tower structure, preferably having conical shape, protruding from an inner surface from proximate end at the cover to towards a distal end. The distal end of the support structure is arranged and adapted for being received by the axially extending circumferential, for instance V- or U- shaped groove, trench or recess of the second circumferential seal of the filter element, and preferably for providing a radially inward backing pressure to the circumferential seal towards the sealing surface of the filter housing, when the cover is mounted on the housing.

The distal end of the support structure can seal axially and/or radially within the V- or U- shaped groove, trench or recess of the second circumferential seal.

According to preferred embodiments, the housing further comprises at least one partial volume for receiving a portion of the first end cap within the housing, the partial volume being arranged below, preferably directly below or adjacent, an undercut location within the housing, preferably adjacent to the insertion opening.

According to preferred embodiments, the filter media pack of the filter element is installed in a twisted configuration.

It is an advantage that the deformable filter element can have a maximal length that is longer than the height of the installation cavity in the housing, and that by twisting the media the length of the filter element can be reduced to fit the housing, thereby introducing more media into the same internal housing volume.

According to preferred embodiments, the housing comprises a housing sidewall arranged generally along an outer radial surface of the filter media pack which is open and comprises a grid structure.

According to preferred embodiments, a radial sidewall of the cover is open and comprises a grid structure.

According to preferred embodiments, at least one of the grid structures of cover or housing sidewall comprises one or more flow guiding means such a flow guiding ribs, fins or vanes.

It is an advantage that flow guiding means such as ribs, fins or vanes can be positioned in a predetermined configuration, for instance to provide an optimal flow direction with respect to the pleat positioning or expected media dust loading of the filter media pack. For a good filtration performance and optimal use of pleated filter media, the distribution of the flow per pleat is very important. In prior art installations the dust can set on one part of the element causing an uneven loading, resulting in higher restriction and sub-optimal use of the filtration media. By controlling any combination of position, spacing and/or angle of the ribs/fins/vanes the air flow around the pack can be controlled to provide a good even flow distribution over all the pleats. The fins, ribs or vanes can further serve acoustic damping purposes or perform flow straightening, for instance for flow measurement purposes.

In a fourth aspect of the present disclosure, a filter housing is disclosed comprising an inlet and an outlet and adapted for receiving a replaceable filter element in a sealing manner, such that air passing from an inlet of the housing to an outlet of the housing is filtered by the filter element, the housing comprising a servicing opening for receiving the filter element in a main part of the housing and the housing comprising a housing cover, for closing of the service opening, wherein the inlet of the housing is provided in the main part and/or housing cover, and wherein the inlet comprises a grid-like inlet structure.

According to preferred embodiments, the housing comprises a housing sidewall arranged generally along an outer radial surface of the filter media pack when installed in the housing, and the outer radial surface comprises a grid structure.

According to preferred embodiments, a radial sidewall of the cover comprises a grid structure.

According to preferred embodiments, at least one of the grid structures of cover or housing sidewall comprises one or more flow guiding means such a flow guiding ribs or vanes. The advantages are similar as those explained for the flow guiding means of the main housing.

According to preferred embodiments, the housing main part and/or housing cover comprises plastic.

According to preferred embodiments, the housing main part and/or housing are formed by injection moulding.

In a fifth aspect of the present disclosure, a filter element is disclosed comprising a flexible filter media pack arranged in a tubular manner around an axis, a first open end cap connected to a first axial end of the filter media pack in a fluid tight manner, and a second open end cap connected to a second axial end of the filter media pack in a fluid tight manner, wherein the second open end cap comprises a central opening and a second circumferential seal comprising a radially inwardly into the central opening extending portion of the second end cap, the radially inwardly extending portion comprising at least one circumferential groove, trench or recess arranged adjacent to the central opening, the groove, trench or recess projecting into an inner volume of the filter media pack.

According to preferred embodiments the circumferential groove, trench or recess is oriented in a direction parallel to the axis of the filter media pack.

According to preferred embodiments the filter media pack is of the cone-type, i.e. arranged in a conical manner, wherein the cross-section of the respective cone is decreasing from the first axial end of the media pack to the second axial end of the media pack, and the second end cap has a smaller diameter outer diameter than the first end cap.

According to preferred embodiments, the second end cap is flexible and can non-destructively be deformed, for instance between a first shape and a different second shape.

According to preferred embodiments, a minimal radial cross-dimension of the second shape of the second open end cap is at least 5%, or at least 10%, or at least 15%, or at least 20%, or at least 25%, or at least 30 %, or at least 40%, or at least 50, or at least 75% smaller than a minimal radial cross-dimension of the first shape.

According to preferred embodiments, a minimal radial cross-dimension of the second shape of the second open end cap is at least 5mm, or at least 10 mm, or at least 15 mm, or at least 20 mm, or at least 25 mm or at least 5 cm smaller than a minimal radial cross-dimension of the first shape of the second open end cap.

According to preferred embodiments, the second end cap can be deformed in a radial direction by radial force components which are smaller than 40 N, or smaller than 30 N, or smaller than 20 N, or smaller than 10 N.

According to preferred embodiments, the second end cap is elastically deformable.

According to preferred embodiments, the second end cap is substantially rigid.

According to preferred embodiments, the second circumferential seal is formed integrally with the second end cap.

According to preferred embodiments, the second circumferential seal comprises an N-fold, for instance a 1-fold rotational symmetry with respect to the filter media pack axis.

According to preferred embodiments, the second circumferential seal comprises at least one lobe which protrudes radially, inwardly or outwardly.

According to preferred embodiments, the second circumferential seal comprises at least one lobe which protrudes axially, inwardly or outwardly.

According to preferred embodiments, the second circumferential seal is arranged along a slanted plane with respect to a plane perpendicular to the filter media pack axis.

According to preferred embodiments, the filter media pack comprises pleated media, and the media comprises one or more layers selected from the group of media layers and support layers.

According to preferred embodiments, the second end cap is connected to the filter media by potting and possibly manufactured by potting.

In a sixth aspect of the present disclosure, a filter assembly is disclosed comprising a filter housing having a housing axis and a filter element according to any of the embodiments of the fifth aspect arranged into the housing along the housing axis, the filter housing comprising a housing cover, the housing cover comprising a filter media pack inner support structure, such as a tower structure, preferably having conical shape, protruding from an inner surface from proximate end at the cover to towards a distal end. The filter housing comprises a first end and a second end, the first end comprising a filter insertion opening and being adapted for receiving the cover, the second end arranged at an opposite end of the first end and comprising an outlet opening, and the second end further comprising a sealing surface complementary to the second circumferential seal, for receiving the second circumferential seal in a sealing manner.

According to preferred embodiments, the distal end of the support structure is arranged and adapted for being received by the axially extending circumferential groove, trench or recess of the second circumferential seal of the filter element, and for providing a radially outward backing pressure to the circumferential seal towards the sealing surface of the filter housing, when the cover is mounted on the housing.

According to preferred embodiments, the second circumferential seal comprises at least one lobe which protrudes radially, and the distal end of the support structure comprises at least one radially inwardly protruding lobe corresponding to the at least one radially protruding lobe of the second circumferential seal.

According to preferred embodiments, the second circumferential seal comprises at least one lobe which protrudes axially, and the distal end of the support structure comprises at least one axially inwardly protruding lobe corresponding to the at least one axially protruding lobe of the second circumferential seal.

In a seventh aspect of the present disclosure, a housing cover for a filter housing is disclosed, comprising an axial end wall connected to a circumferential sidewall arranged around a longitudinal axis, wherein a projection of the axial end wall (or its contour) along the longitudinal axis on a plane perpendicular thereto comprises a 1-fold rotational symmetry around the longitudinal axis.

According to preferred embodiments, the projection is generally rotationally symmetric, for instance circular, but is made rotationally asymmetric by one, two or more flat or arc sections arranged as cutting chord lines.

According to preferred embodiments, said sidewall comprises or defines a lower rim surrounding a housing interfacing opening, and the circumferential sidewall is interrupted (or comprises one or more annular gaps) or is straight or is substantially straight within one or more angular ranges about the longitudinal axis (in another view the circumferential sidewall comprises a straight section).

According to preferred embodiments, a contour of the axial end wall generally corresponds to one or more subsequent sections of a predetermined circle shape, connected by one or more chord lines of the circle shape between adjacent circle sections, and the circumferential sidewall is interrupted or straight in the region corresponding to the chord lines (defining one or more flats of the housing cover).

According to preferred embodiments, the housing cover further comprises a sensor port opening in the axial end wall.

According to preferred embodiments, the housing cover comprises an inner surface and a circumferential sealing surface arranged on the inner surface for receiving a filter element seal.

According to preferred embodiments, the circumferential sealing surface is axially protruding from the axial end wall on the inner surface.

According to preferred embodiments, the circumferential sealing surface comprises an N-fold rotational symmetry.

According to preferred embodiments, the housing cover comprises one or more axial end wall openings in the axial end wall.

According to preferred embodiments, the housing cover comprises one or more, for instance centrally positioned axial end wall outlet openings, positioned radially within the circumferential sealing surface.

According to preferred embodiments, the housing cover comprises a second circumferential sealing surface arranged on the inner surface for receiving a second filter element seal, arranged radially within the first circumferential sealing surface, and one or more for instance centrally positioned axial end wall inlet openings, positioned radially within the second circumferential sealing surface.

According to preferred embodiments, the second circumferential sealing surface comprises an N-fold rotational symmetry.

According to preferred embodiments, the housing cover comprises a filter media support structure protruding axially or mainly axially from the inner surface from the axial end wall.

According to preferred embodiments, the media support structure comprises a tower structure, preferably a conical tower structure, which extends axially from a proximal end at the inner surface of the cover to a distal end away from the cover. The tower can be separately manufactured from the cover and can be joined afterwards, or the end cap and housing cover can be manufactured in a single step.

According to preferred embodiments, the distal end of the tower structure comprises an N-fold rotational symmetry around the longitudinal axis.

According to preferred embodiments, the lower rim is defined by a plane which is slanted with respect to a direction perpendicular to the longitudinal axis. It is an advantage that due to this slant, the cover automatically aligns to the housing when applying a force of the cover (e.g. by manipulation by hand or cover closing means).

According to preferred embodiments, the axial end wall is arranged perpendicular to the longitudinal axis, and the circumferential sidewall evolves between a minimal width at a minimal axial distance between the lower rim to the axial end wall to a maximal width at a maximal axial distance between the lower rim to the axial end wall.

According to preferred embodiments, the housing cover sidewall comprises one or more housing cover sidewall openings.

According to preferred embodiments, the housing cover further comprises at least a sub-component of a cover closing means or device arranged at or adjacent to the location where said circumferential sidewall is interrupted (or comprises one or more gaps) or is straight or substantially straight. Examples of such a closing means or device are for instance latch and hook arrangements, finger locks, rubber bands, clips, bolts and nuts, wing nuts etc. Preferably the sub-component interacts with its counterpart on a housing, such as and preferably with a counterpart arranged on or adjacent to an undercut section of a housing inlet opening.

In an eighth aspect of the present disclosure, a filter assembly is disclosed comprising a main housing having a servicing opening for receiving a filter element into the housing and a housing cover for covering the servicing opening according to any of the embodiments of the seventh aspect, wherein the servicing opening comprises at least one, or more undercut sections which are complementary to the interruptions or straight sections of the housing cover when the cover is placed on the main housing.

In a nineth aspect of the present disclosure a housing cover is disclosed for a filter housing comprising an axial end wall connected to a circumferential sidewall arranged around a longitudinal axis, and defining a lower rim of the sidewall surrounding an filter housing interfacing opening, wherein the lower rim is defined by a plane which is slanted with respect to a direction perpendicular to the longitudinal axis.

According to preferred embodiments, the axial end wall is arranged perpendicular to the longitudinal axis, and the circumferential sidewall evolves between a minimal width at a minimal axial distance between the lower rim to the axial end wall to a maximal width at a maximal axial distance between the lower rim to the axial end wall.

According to preferred embodiments, the housing cover sidewall comprises one or more housing sidewall openings.

According to preferred embodiments, the housing cover further comprises a sensor port opening in the axial end wall.

According to preferred embodiments, the housing cover further comprises an inner surface and a circumferential sealing surface arranged on the inner surface for receiving a filter element seal.

According to preferred embodiments, the circumferential sealing surface is axially protruding from the axial end wall on the inner surface.

According to preferred embodiments, the circumferential sealing surface comprises an N-fold rotational symmetry.

According to preferred embodiments, the housing cover further comprises one or more axial end wall openings in the axial end wall.

According to preferred embodiments, the housing cover comprises one or more, for instance centrally positioned axial end wall outlet openings, positioned radially within the circumferential sealing surface.

According to preferred embodiments, the housing cover further comprises second circumferential sealing surface arranged on the inner surface for receiving a second filter element seal, arranged radially within the first circumferential sealing surface, and one or more for instance centrally positioned axial end wall inlet openings, positioned radially within the second circumferential sealing surface.

According to preferred embodiments, the second circumferential sealing surface comprises an N-fold rotational symmetry.

According to preferred embodiments, the housing cover further comprises a filter media support structure protruding axially from the inner surface from the axial end wall.

According to preferred embodiments, the media support structure comprises a tower structure, preferably a conical tower structure, which extends axially from a proximal end at the inner surface of the cover to a distal end away from the cover.

According to preferred embodiments, the distal end of the tower structure comprises an N-fold rotational symmetry around the longitudinal axis.

According to preferred embodiments, the circumferential sidewall is interrupted (or comprises one or more annular gaps) or is straight within one or more angular ranges about the longitudinal axis.

According to preferred embodiments, a contour of the axial end wall generally corresponds to one or more subsequent sections of a predetermined circle shape, connected by one or more chord lines of the circle shape between adjacent circle sections, and the circumferential sidewall is interrupted or is straight in the region corresponding to the chord lines (defining one or more flats of the housing cover).

In a tenth aspect of the present disclosure, an assembly comprising a main housing having a servicing opening for receiving a filter element into the main housing and a housing cover for covering the servicing opening according to any of the embodiments of the nineth aspect, wherein the servicing opening comprises a rim which lies in a plane which is slanted with respect to a direction perpendicular to a longitudinal axis of the housing cover, corresponding to the slanted plane of the lower rim of the housing cover.

Any of the embodiments and embodiment features described for any of the above aspects are also meant to be disclosed for any of the other aspects, mutatis mutandis. For instance, any features described for the filter element, assembly, package or housing cover per se are meant to be disclosed also for the other aspects.

For instance, the position of the undercut sections in the insertion or servicing opening of the housing can for instance be as in any of the disclosed housing examples.

It can be advantageous to position at least one undercut section at a bottom or lower surface of the filter servicing opening or filter housing when the assembly is installed/ in use. Such an undercut section will create the need for the filter element to be lifted over the undercut section, such that no dust that may have accumulated in the air cleaner housing will be pulled out by sliding the filter element/filter media pack over the lower inner wall of the filter housing when removing it. Also, the presence of an undercut section at the bottom or lower surface of the filter servicing opening or filter housing when the assembly is installed/ in use, brings the advantage than any liquid used for cleaning the inner wall of the housing can be contained within the housing by the undercut section. An undercut section at the bottom or lower surface of the filter servicing opening or filter housing can advantageously also comprise a dust evacuation opening or dust evacuation valve.

It can also be advantageous, e.g. in case of the presence of a single undercut section, to have the undercut section at a top surface of the filter servicing opening or filter housing when the assembly is installed/ in use. If the assembly receives the filter element in a horizontal direction, the first end cap of the filter element can be positioned adjacent of against the undercut section, keeping the element in place, and blocking a downward tilting movement of the filter element in the housing that may break the housing seal at the second end of the filter element.

Whether there is only one or a plurality of undercut sections, it can always be an advantage of the presence of the undercut section(s) that it can keep the filter element in place, i.e. that it can block an axial movement of the filter element, in the housing along the housing axis.

### Short description of the drawings

These and further aspects of the present disclosure will be explained in greater detail by way of example and with reference to the accompanying drawings in which:
Fig. 1 to 3 illustrate a first preferred embodiment of the present disclosure in a schematic manner.
Fig. 4 to 6 illustrate a second preferred embodiment of the present disclosure.
Fig. 7 illustrates a variant of the second preferred embodiment.
Fig. 8 (a) to (c) illustrates a third preferred embodiment of the present disclosure, having an open housing sidewall and a slanted housing/cover interface. The described concept is not limited to assemblies comprising disclosed filter elements having flexible and/or elastic features, but can be applied more generally.
Fig. 9 illustrates the concept of a flexible first end cap.
Fig. 10 (a) (b) illustrate a variant of the third preferred embodiments illustrated in Fig. 8.
Fig. 11(a) to (c) illustrate a variant of the third preferred embodiments illustrated in Fig. 8.
Fig. 12 (a) to (c), Fig. 13 and Fig. 14 illustrate a fourth preferred embodiment of the present disclosure.
Fig. 15 and 16 illustrate variants of the fourth preferred embodiment, possibly for use in combination with embodiments comprising a media pack support structure protruding from an inner surface of the housing cover, but not limited thereto.
Fig. 17 (a) to (c) illustrate a fifth embodiment of the present disclosure, which is without media support means protruding from an inner surface of the housing cover.
Fig. 18 (a) (b), Fig. 19 (a) (b) and Fig. 20 (a) (b) illustrate features of housing covers for use with any of the embodiments of the present disclosure.
Fig. 21 (a) to (c), Fig. 22 (a) to (c), Fig. 23 (a) to (c), and 24 illustrate some examples of first and second circumferential seal configurations, and associated sealing surfaces on the housing cover and housing.
Fig. 25 (a) and (b) illustrate an example of a locking mechanism of a housing cover for use with embodiments of the present disclosure.
Fig. 26 (a) to (c) illustrate further preferred embodiments of the present disclosure in which the first and/or second end cap, and their corresponding circumferential seals are slanted with respect to the longitudinal axis of the filter element / filter media pack.
Fig. 27 (a) to (c) illustrate aspects of elastic deformation of a filter element end cap according to aspects of the present disclosure.
Fig. 28 (a) (b) illustrate a further preferred embodiment of the present disclosure, wherein a filter media pack is deformed by the media support structure protruding from the housing cover.
Fig. 29 (a) and Fig. 30 illustrate a sixth preferred embodiment of the present disclosure, which comprises a first and a second main filter element, the second filter element not being a safety filter element but filtering unfiltered air flow in parallel with the first filter element.
Fig. 31 (a) (b) and Fig. 32 illustrate variants of the sixth preferred embodiment of the present disclosure.

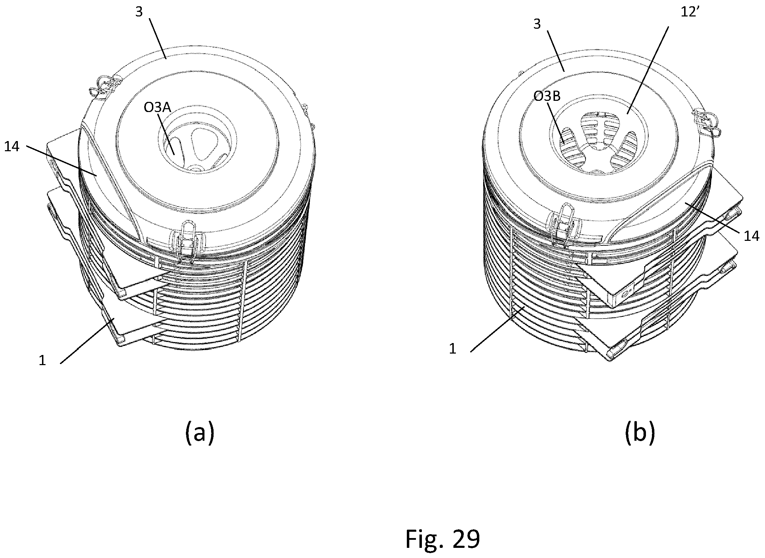

Fig. 29 (b) illustrates a seventh preferred embodiment of the present disclosure.

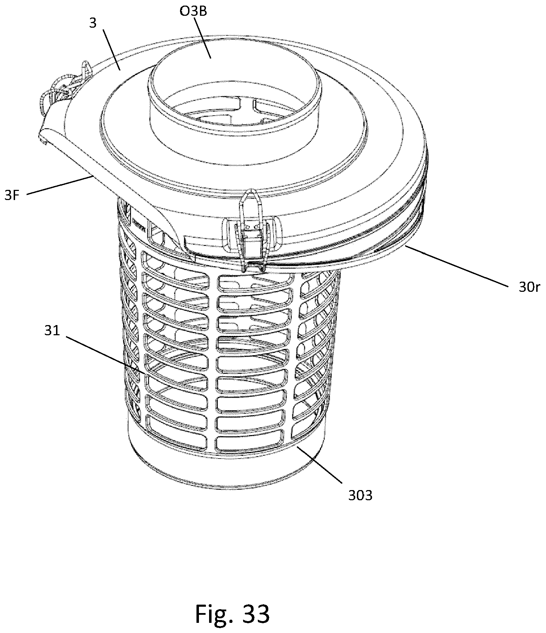

Fig. 33 illustrates a variant of the seventh preferred embodiment.

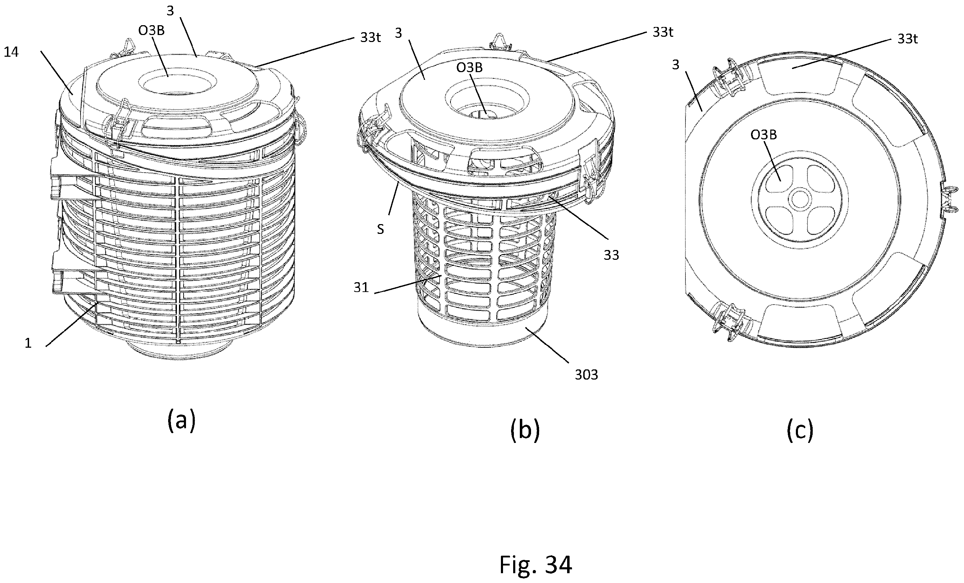

Fig. 34 (a) to (c) illustrate variants of the seventh preferred embodiment of the present disclosure.

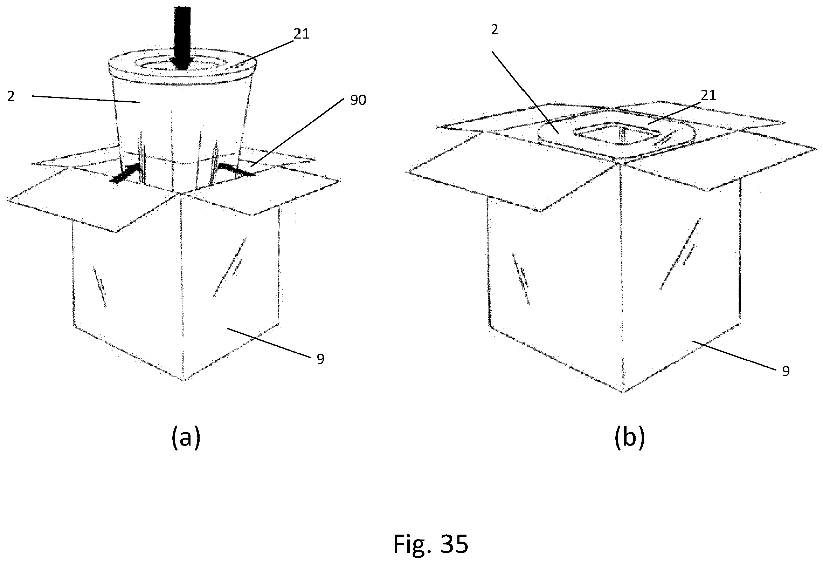

Fig. 35 (a) (b) illustrates advantageous packaging associated with filter elements associated with the present disclosure.

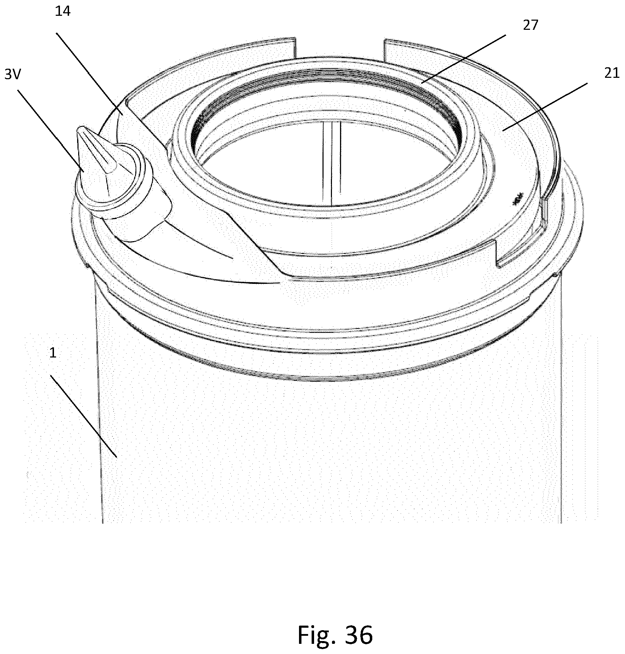

Fig. 36 illustrates the integration of a dust evacuation valve on an undercut section.

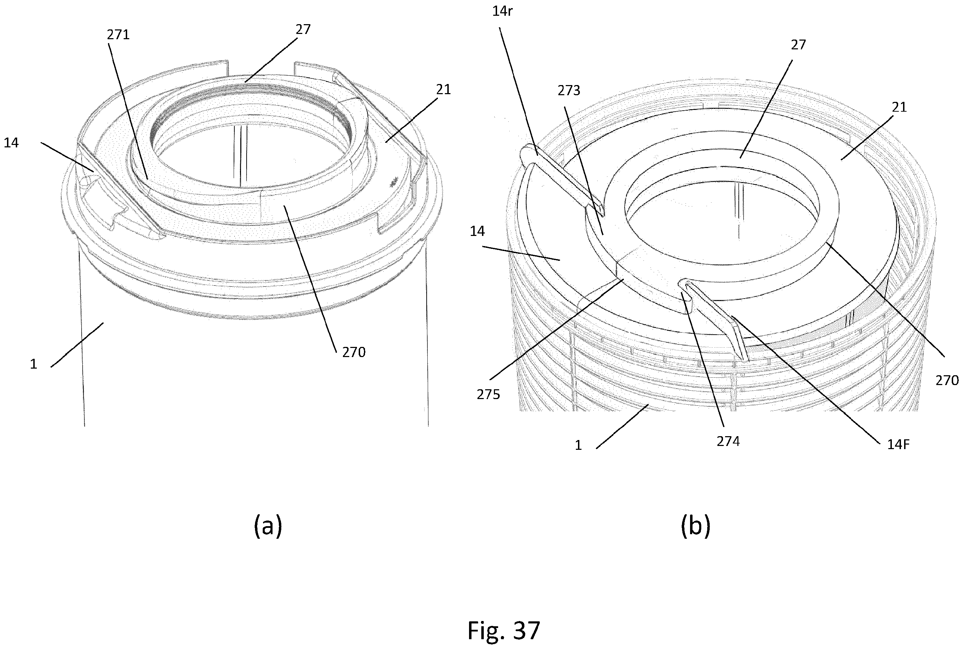

Fig. 37 (a) and (b) illustrate examples of a first end cap with manipulation means.

The drawings of the figures are neither drawn to scale nor proportioned. Generally, identical components are denoted by the same reference numerals in the figures.

### Detailed description of preferred embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

Although a number of the drawings presented and discussed below are specifically addressing embodiments of a filter element for filtering air, the present disclosure is not limited thereto.

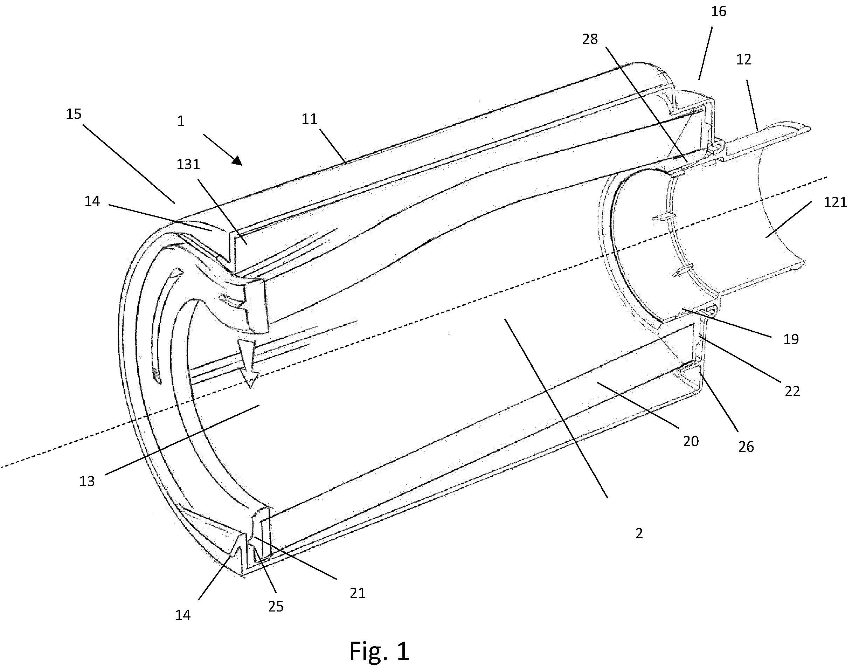

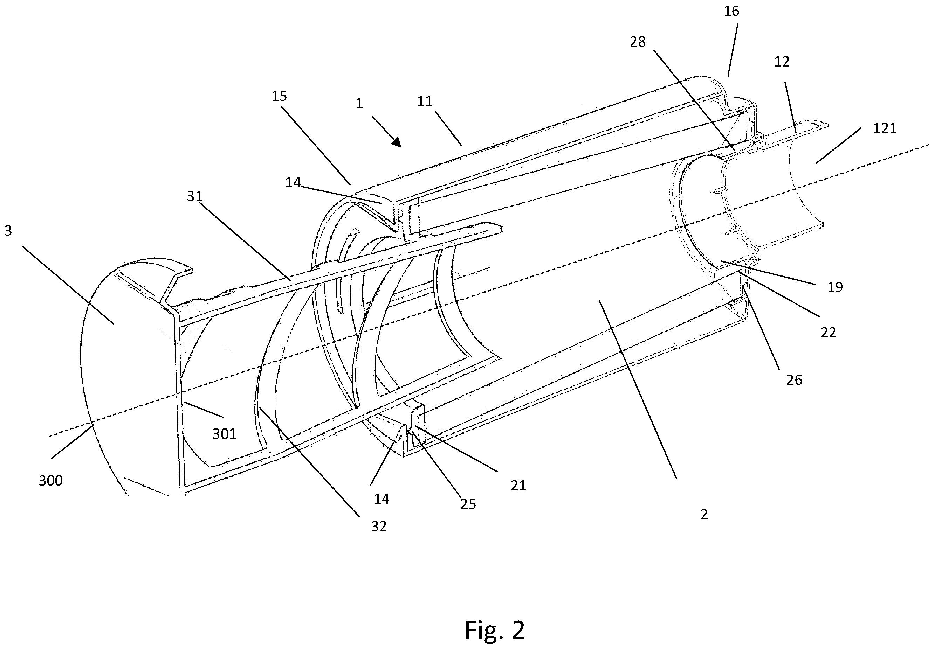

Fig. 1 to 3 illustrate a first preferred embodiment of the present disclosure in a schematic manner.

A filter element 2 comprising a flexible filter media pack 20 is arranged in a tubular manner around an axis. A first open end cap 21 is connected to a first axial end 25 of the filter media pack 20 in a fluid tight manner. A second open end cap 22 is connected to a second axial end 26 of the filter media pack 20 in a fluid tight manner. The first and second end caps 21, 22 can for instance be formed and attached to the filter media pack 20 by a polyurethane potting process. In such case, a first circumferential seal 27 of the first end cap 21 and a second circumferential seal 28 of the second end cap 22 can be formed during the same process. The first circumferential seal 27 is a portion of the first end cap 21 extending radially inwardly. The second circumferential seal 28 is a portion of the second end cap 22 and extends for instance radially outwardly. Both circumferential seals 27, 28 are generally cylindrically shaped. The filter media pack 20 is conically shaped in its non-deformed state.

The first end cap 21 is flexible and can non-destructively be deformed, for instance between a first shape and a different second shape. Preferably it is elastically deformable.

The filter element 2 is arranged in a main filter housing 1, having a housing sidewall 11 and a first end 15 and a second end 16. The first end 15 comprises the filter insertion opening 13. The second end 16 is arranged at an opposite end of the first end 15 and comprises an outlet opening 121 or outlet tube 12 with outlet opening 121. The second end 16 further comprises a sealing surface 19 complementary to the second circumferential seal 28, for receiving the second circumferential seal 28 in a sealing manner, around the outlet opening 121, when the filter element 2 is inserted in the housing 1.

The servicing opening 13 at the first end 15 comprises two undercut sections 14 radially inwardly extending from the sidewall 11 of the housing 1.

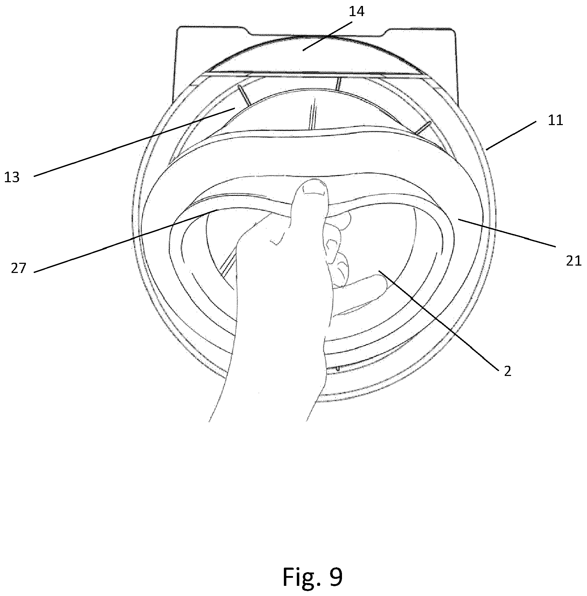

Due to the filter element 2 being conical in nature, the second end cap 22, which can for instance not be non-destructively deformable can enter the servicing opening 13 and be guided towards the second end 16 of the housing 1 for being installed. The first end cap 21 though is too large to pass the undercut sections 14 of the insertion opening 13. As it is non-destructively deformable, e.g. elastically deformable, the first end cap 21 can be reshaped into a second shape or state, which is smaller, and which can enter the servicing opening 13. The deformation of the first end cap is illustrated for instance in Fig. 9. Optionally, a manipulation device or means ( see for instance Fig. 37 (a) and (b)) such as a handle, adapted and arranged or pulling a portion of the first end cap radially inwardly, can be provided. The manipulation means or device can comprise a handle bar or structure which is bridging opposite sides of the open end cap over a central opening in the first end cap. Alternatively, the optional manipulation means can comprise at least one radially inwardly or outwardly directed flap or ear structure.

Once the first end cap 21 has passed the servicing opening 14, it returns to its original shape and is positioned partially below the undercut section 14, in a sub volume 131 of the inner volume of the filter housing 1. It can be noted that a projection of the filter element 2 along the housing axis intersects a projection of the undercut section 14 along the housing axis, the intersection corresponding to a projected overlap area.

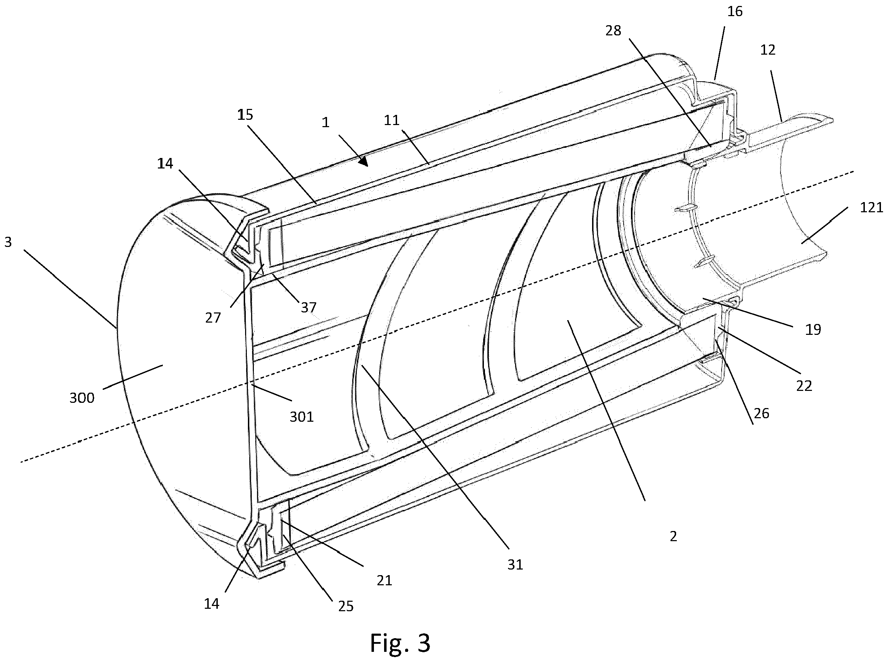

A housing cover 3 is then provided (Fig. 3) to close the insertion or servicing opening 13 of the housing. The housing cover 3 comprises a filter media pack inner support structure 31, such as a tower structure 31, preferably having conical shape, protruding from (a proximate end at) an inner surface 301 towards a distal end. The tower structure 31 is open in nature and can comprise a rib or grid structure 32, and can serve as an inner liner for the filter media pack 20. The proximate end of the tower structure 31 is closed and forms a sealing surface 37 for the first circumferential seal 27, when the cover 3 is mounted on the main housing 1. In this case the cover 3 also covers the undercut sections 14 of the servicing opening 13.

The housing also comprises an inlet 17, which has not been depicted. One or more inlet openings can for instance be provided in a sidewall 11 of the housing 1.

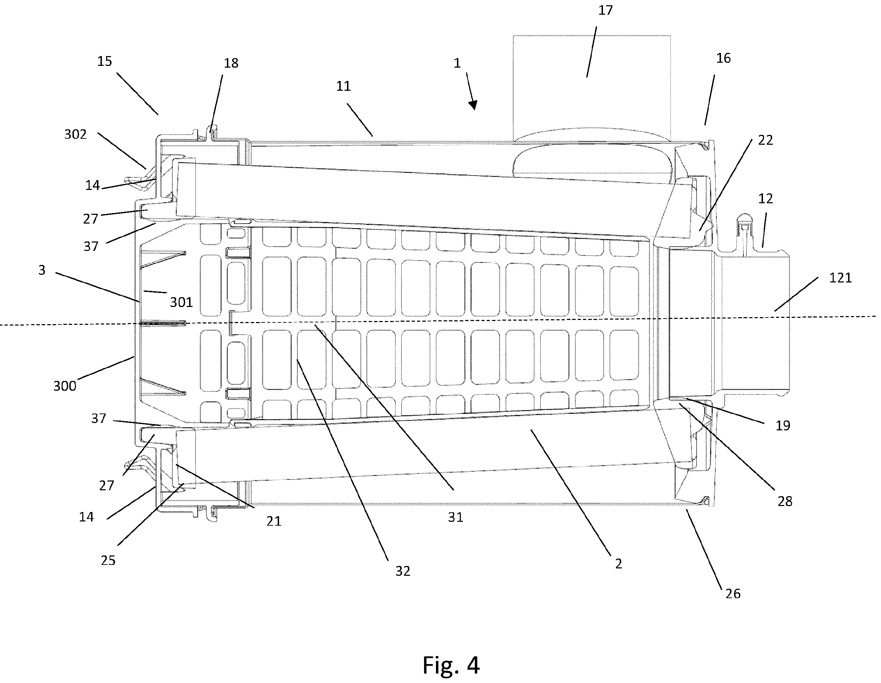

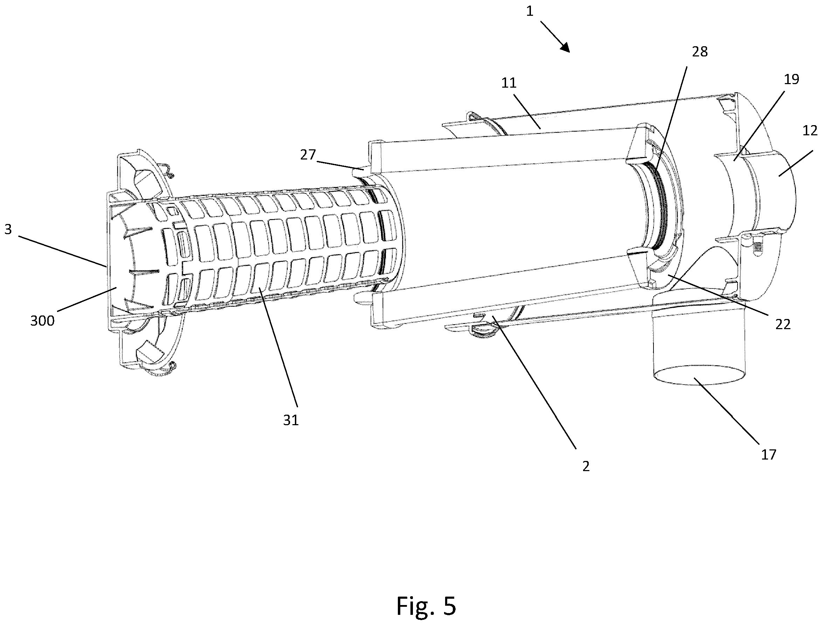

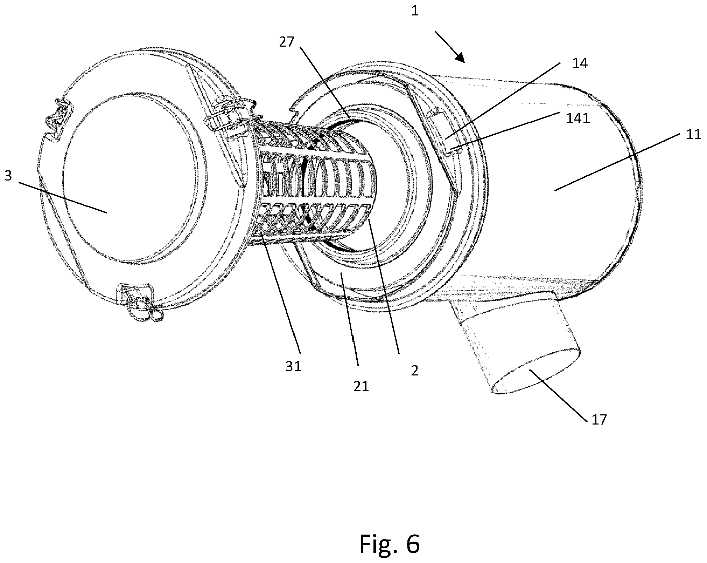

Fig. 4 to 6 illustrate a second preferred embodiment of the present disclosure, which is very similar to the first preferred embodiment. It comprises a housing inlet tube arranged for allowing air to be filtered to enter the filter housing perpendicularly on the housing and filter axis. The air then passes through the filter media pack 20 into the filter's internal volume and leaves the air cleaner through the outlet opening 12. Two diametrically opposed undercut sections 14 are present in the servicing opening 13.

At least one of the undercut sections 14 comprises an alignment feature 141 for aligning with a corresponding alignment feature of the cover 3. A plurality of closing means or devices such as latches 302 is provided on the external surface 300 of the housing cover 3 for locking the cover 3 to the main housing 1. The latches 302 on the cover 3 are adapted for locking behind locking features 18 arranged on the sidewall 11 of the main housing 1, at corresponding positions. The first circumferential seal 27 is sealing against one or more sealing surfaces 37 on the inner surface 301 of the housing cover.

Preferable, one of the closing means such as the latches 302 are positioned on or adjacent to the flat 3F, and interacts with a counterpart on the housing adjacent to the undercut 14, preferably adjacent to or below the flat 14F. Other closing means can off course be utilised, such as for instance finger locks, rubber bands, clips, bolts and nuts.

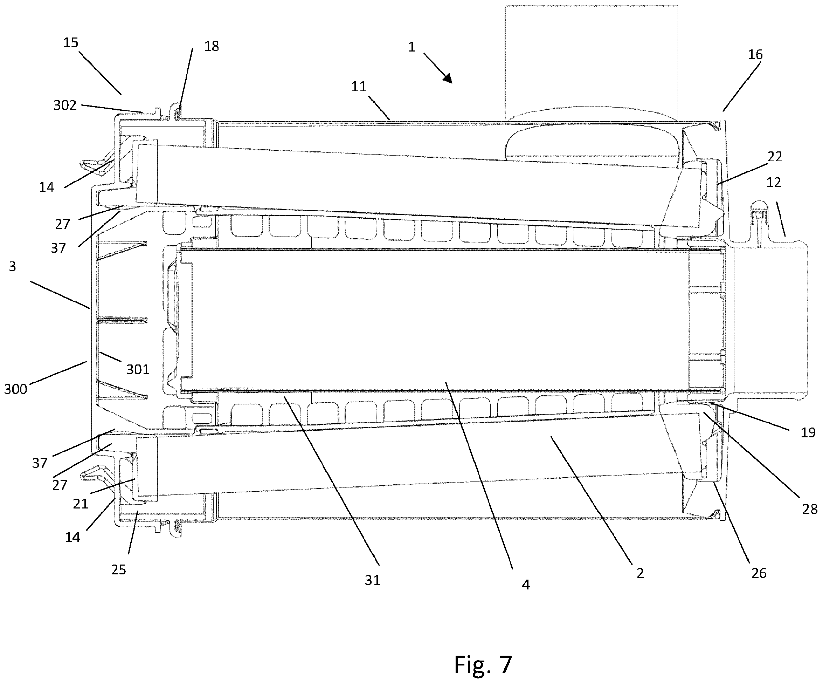

Fig. 7 illustrates a variant of the second preferred embodiment. The air cleaner comprises a further element 4 for interacting with the fluid or air flow, such as a safety filter element or a chemical filtration element. The further element 4 is arranged within the media pack support structure or tower 31 and extends from the second end 16 of the housing partially towards the first end 15. The further element can for instance comprise a circumferential seal oriented radially outwardly for sealing on an inner sealing surface of the outlet tube 12.

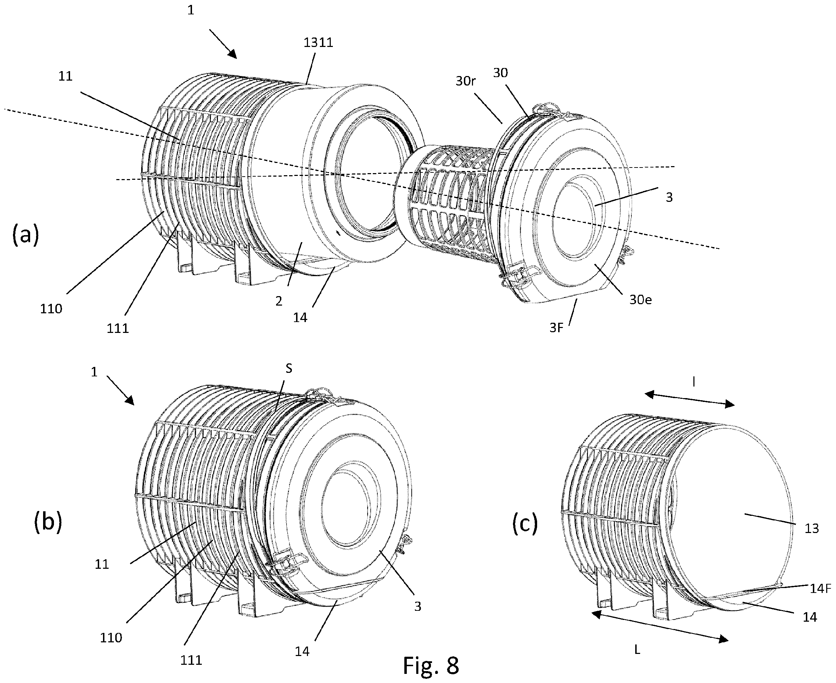

Fig. 8 (a) to (c) illustrate a third preferred embodiment of the present disclosure, which is similar to the previous preferred embodiments, but comprises a slanted housing/cover interface S. The described concept is not limited to assemblies comprising disclosed filter elements having flexible and/or elastic features, but can be applied more generally to non non-destructively deformable filter element 2. The housing cover 3 moreover comprises a single flat section 3F that is complementary to a single undercut section 14 of the servicing opening 13.

The housing cover 3 and filter housing 1 are adapted such that they meet along a slanted plane S, the slanted plane being such that a housing length L of the main housing 1 at a side corresponding to the undercut section 14 is longer than a housing length I at an opposed side of the housing. This brings the advantage that some tilting of the filter element 2 is possible, for instance away from the undercut section 14, before removing or inserting it from/in the servicing opening 13 of the main housing 1, which allows the use of a filter element 2 with a relatively less deformable or non-deformable first end cap 21, or the use of a relatively larger deformable element.

The housing cover 3 comprises an axial end wall 30e connected to a circumferential sidewall 30 arranged around a longitudinal axis, and comprises a lower rim 30r of the sidewall 30 surrounding a filter housing interfacing opening. The lower rim 30r is defined by a plane which is slanted with respect to a direction perpendicular to the longitudinal axis.

The axial end wall 30e of the cover 3 is arranged perpendicular to the longitudinal axis, and the circumferential sidewall 30 evolves between a minimal width at a minimal axial distance between said lower rim 30r to the axial end wall 30e to a maximal width at a maximal axial distance between the lower rim 30r to the axial end wall 30e.

A contour (or projection on a plane perpendicular on the axis) of the axial end wall 30e of the housing cover 3 corresponds to one (can also be more subsequent) section(s) of a predetermined circle shape, connected by one (or more) chord lines of the circle shape between adjacent circle sections, and the circumferential sidewall 30 is interrupted or is straight in the region corresponding to the chord line(s). The interrupted or straight section corresponding to the flat 3F. The flat 3F of the cover 3 and (e.g. a straight chord-surface 14F of) the undercut section 14 serve as alignment features between cover 3 and main housing as they abut one another when the cover 3 is placed on the main housing 1.

The servicing opening of the main housing comprises a rim 1311 which lies in a plane which is slanted with respect to a direction perpendicular to a longitudinal axis of the housing or housing cover, corresponding to the slanted plane of the lower rim 30r of the housing cover 3.

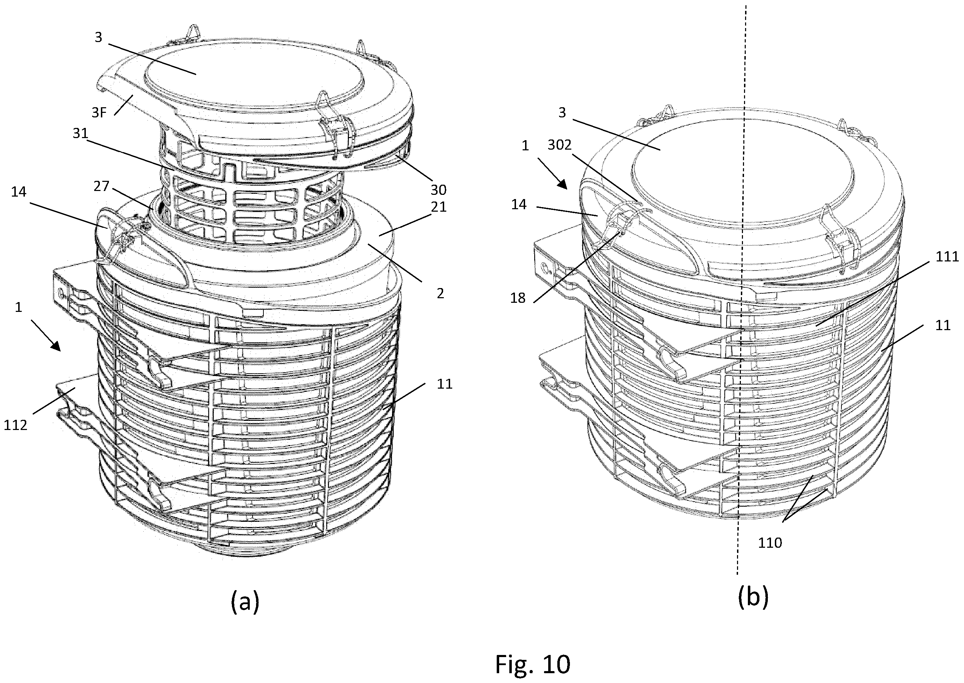

Fig. 10 (a) (b) illustrate a variant of the third preferred embodiment illustrated in Fig. 8, and comprises an open housing sidewall 11 which comprises a grid structure, preferably comprising openings 111 separated by flow guiding blades or fins 110 (as an inlet; in the alternative it can be a closed sidewall with a separate inlet opening). It further comprises a latch connection towards the housing cover 3 arranged on the undercut section 14, and the housing cover 3 comprises a catch surface for the latch adjacent to the flat 3F (or vice versa). The undercut section 14 is positioned at the side of the housing mounting means 112, which is the side that is often more difficult to reach when servicing. It is an advantage that it is more easy to reach the latch on the undercut section 14 when servicing when compared to a latch mounted on the sidewall 11 of the housing at the side of the housing mounting means 112.

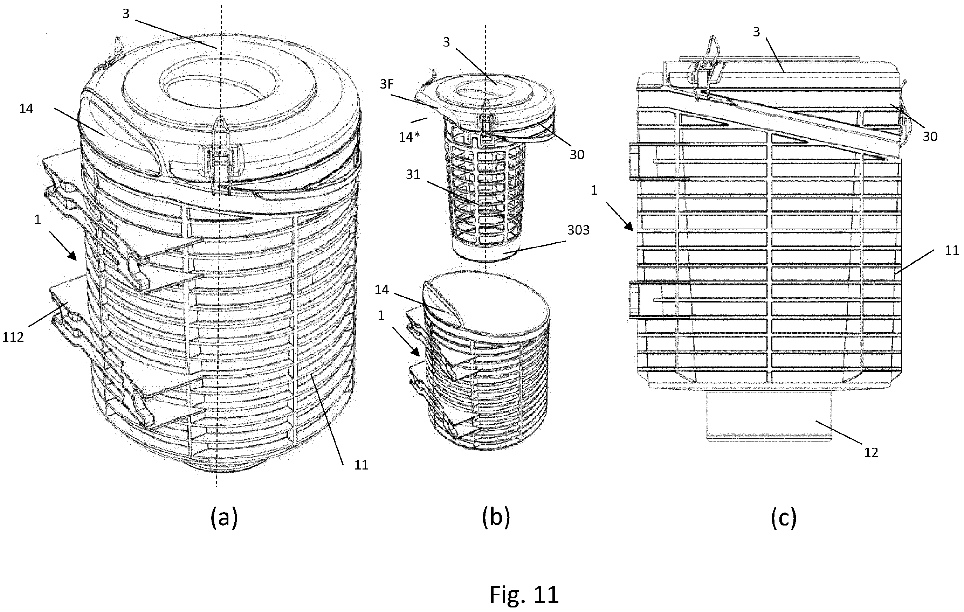

Fig. 11 (a) to (c) illustrates a variant of the third preferred embodiment illustrated in Fig. 8, also having a closed housing sidewall 11 of the housing 1, comprising a latch and catch surface connection between the sidewalls 30 and 11 of the housing cover 3 and main housing sidewall 11.

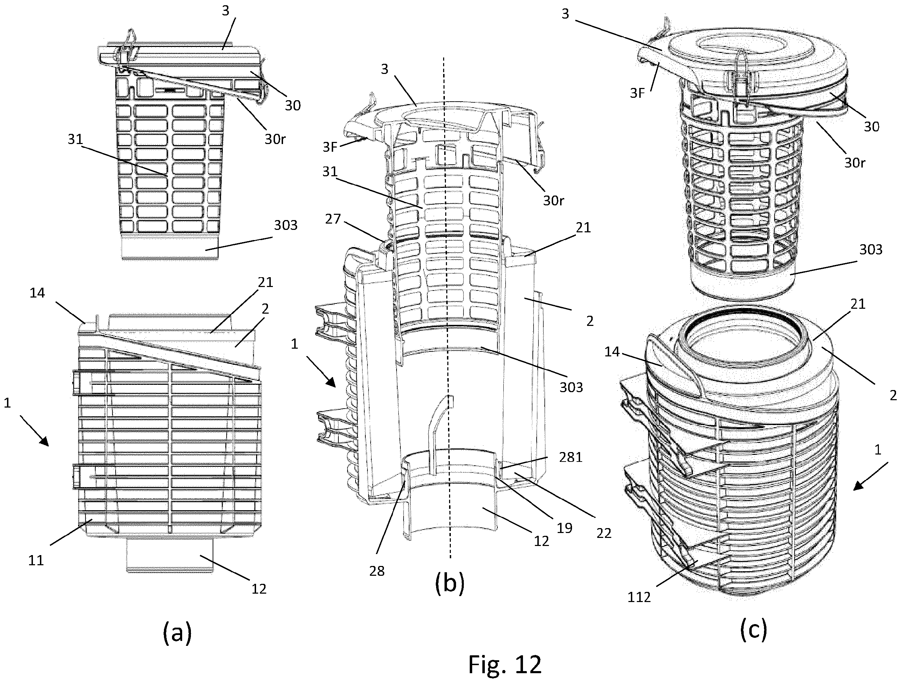

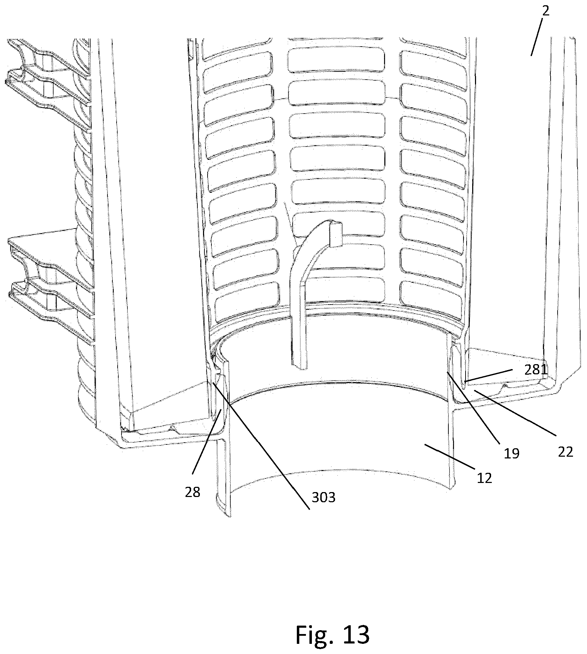

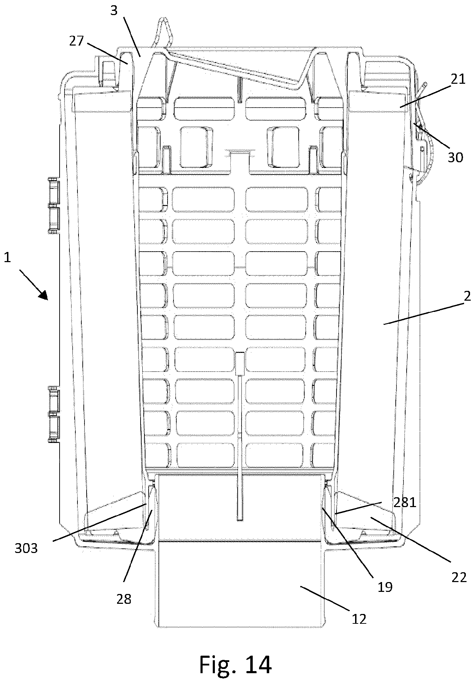

Fig. 12 (a) to (c), Fig. 13 and Fig. 14 illustrates a fourth preferred embodiment of the present disclosure, which is similar to the third preferred embodiment and its variants disclosed in relation with Fig. 8, Fig. 10 and Fig. 11.

According to the fourth preferred embodiment, a distal end 303 of the support means or tower 31 of the cover 3 interacts with the second circumferential seal 28 of the filter element 2, when the filter element 2 is installed in the main housing 1 and the main housing 1 is closed by the cover 3.

The filter element 2 comprises a (preferably but not necessarily flexible) filter media pack 20 arranged in a tubular manner around an axis, a first open end cap 21 connected to a first axial end 25 of the filter media pack 20 in a fluid tight manner, and a second open end cap 22 connected to a second axial end 26 of the filter media pack 20 in a fluid tight manner. The filter element 2 and media pack 20 are conical. The cross-section of the filter media pack cone is decreasing from the first axial end 25 of the media pack to the second axial end 26 of the media pack 20. The second end cap 22 has a smaller diameter outer diameter than the first end cap 21.

The second open end cap 22 comprises a central opening and a second circumferential seal 28. The second circumferential seal 28 comprises a radially inwardly into the central opening extending portion of the second end cap 22. The radially inwardly extending portion comprising at least one circumferential (for instance U- shaped or V-shaped) groove, trench or recess 281 arranged adjacent to the central opening. The groove, trench or recess projects into an inner volume of the filter media pack 20, for instance in a direction parallel to the axis of the filter media pack 20 or filter element 2.

The filter housing comprises a first end 15 and a second end 16, the first end 15 comprising a filter insertion opening 13 and being adapted for receiving the cover 3 with tower 31. The second end 16 is arranged at an opposite end of the first end 15 and comprising an outlet opening 121. The second end 16 further comprises the sealing surface 19 complementary to the second circumferential seal 28, for receiving the second circumferential seal 28 in a sealing manner when the filter element 2 is correctly installed in the housing.

For the present disclosure, the terms inlet and outlet have been used for openings in the housing through which the air flow passes "from inlet to outlet". The skilled person knows that in certain assembly configurations, a reverse flow can be applied, wherein the flow can be in a reverse direction from outlet to inlet. This does not impact the nature of the inventive concepts of the present disclosure.

The distal end 303 of the support structure 31 is arranged and adapted for being received by the axially extending circumferential groove, trench or recess 281 of the second circumferential seal 28 of the filter element 2, and for providing a radially outward backing pressure to the circumferential seal 28 towards the sealing surface 19 of the filter housing 1, when the cover 3 is mounted on the housing 1.

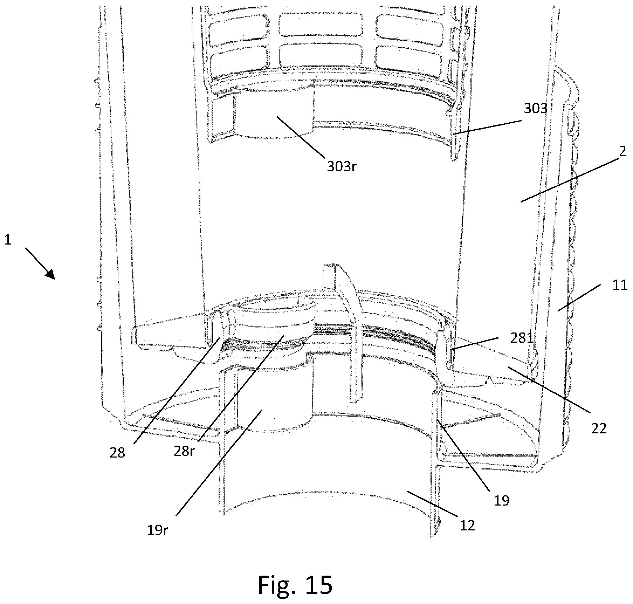

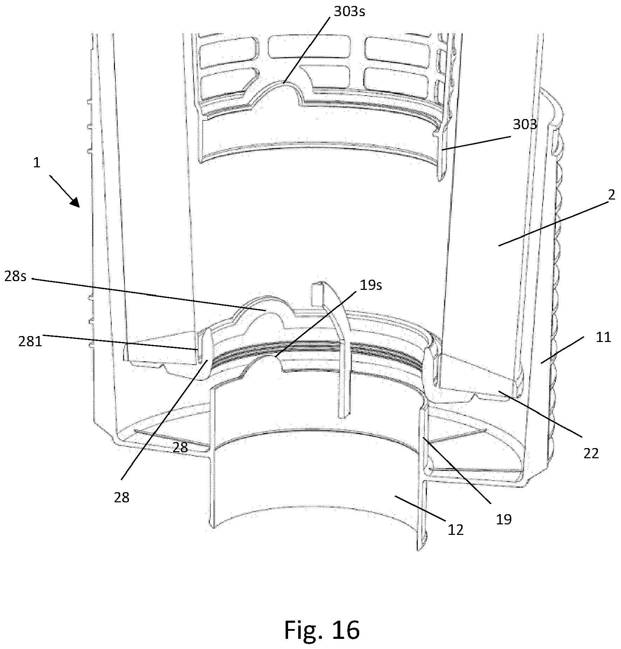

Fig. 15 and 16 illustrate variants of the fourth preferred embodiment, possibly for use in combination with embodiments comprising a media pack support structure 31 protruding from an inner surface 301 of the housing cover 3, but are not limited thereto.

In embodiments illustrated by Fig. 15, the distal end 303 of the support structure 31 comprises at least one radially inwardly protruding lobe 303r corresponding to at least one radially inwardly protruding lobe 28r of said second circumferential seal 28 and corresponding to at least one radially inwardly protruding lobe 19r of said second circumferential sealing surface 19.

In embodiments illustrated by Fig. 16, the distal end 303 of the support structure 31 comprises at least one axially inwardly protruding lobe 303s corresponding to at least one axially inwardly protruding lobe 28s of the second circumferential seal 28 and corresponding to at least one axially inwardly protruding lobe 19s of said second circumferential sealing surface 19.

The embodiments of Fig. 15 and Fig. 16 allow for a rotational locking of the filter element and for a predetermined clocking or angular orientation of the filter element 2 within the housing 1.

In further embodiments, there is no support structure or tower 31. The interaction of the distal end of the support structure or tower 31 as described in relation with Fig. 12 (a) to (c), Fig. 13 and Fig. 14, Fig. 15 and Fig. 16 can then for instance be replaced by a similar interaction between a separate mounting device (not depicted), which is inserted in the at least one circumferential (for instance U- shaped or V-shaped) groove, trench or recess 281 arranged adjacent to the central opening, and performs the same function as described for the distal end 303. The mounting device can for instance generally comprise a ring structure, and can have similar radially and axially inwardly protruding lobes as disclosed for the distal end of the tower 31.

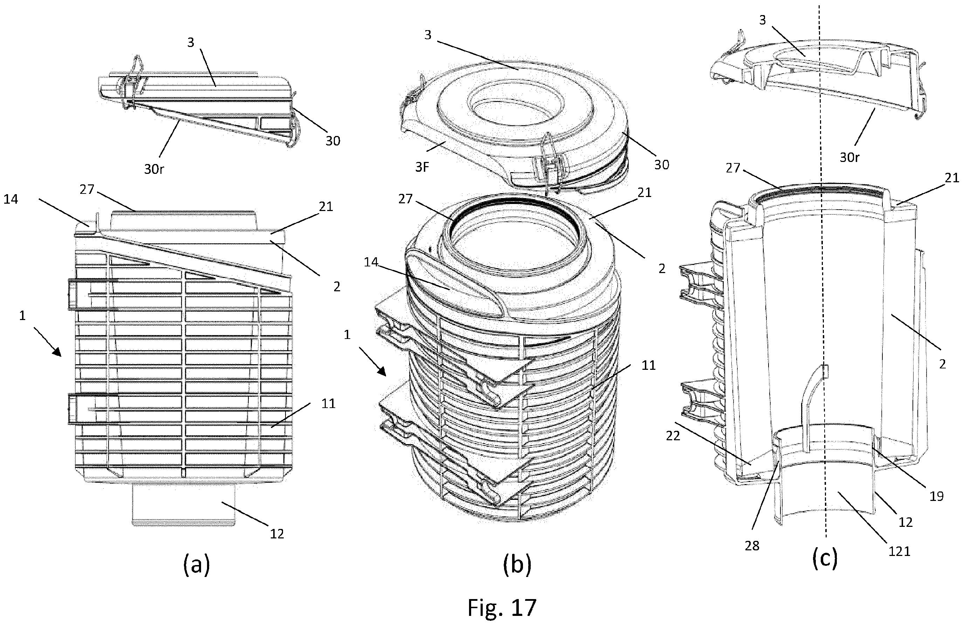

Fig. 17 (a) to (c) illustrate a fifth preferred embodiment of the present disclosure, which is without media support means protruding from an inner surface of the housing cover. This embodiment is similar to all of the previous embodiments in as far as it does not concern presence of a media support means or tower 31 and possible interaction of (the distal end 303 of) the tower with the second circumferential seal. Indeed, when the filter element 2 does for instance not comprises flexible or elastically deformable portions for any of the first end cap 21, media pack 20 and second end cap 22, the same advantages exist for the interaction between the main housing 1, the housing cover 3 and the filter element 2, for instance relating to having a slanted interface S between the housing cover 3 and the main housing 1, and to having an undercut section 14 in the housing inlet opening 13 and a complementary flat 3F on the housing cover 3.

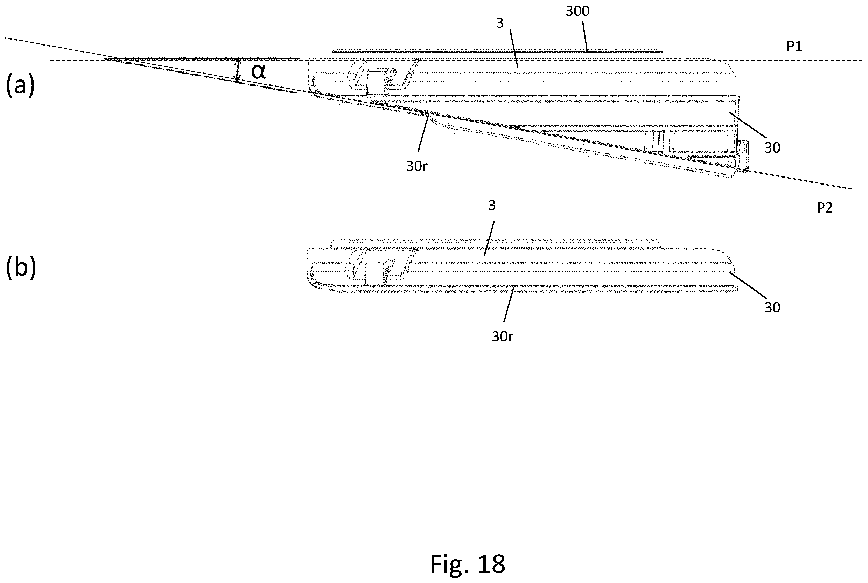

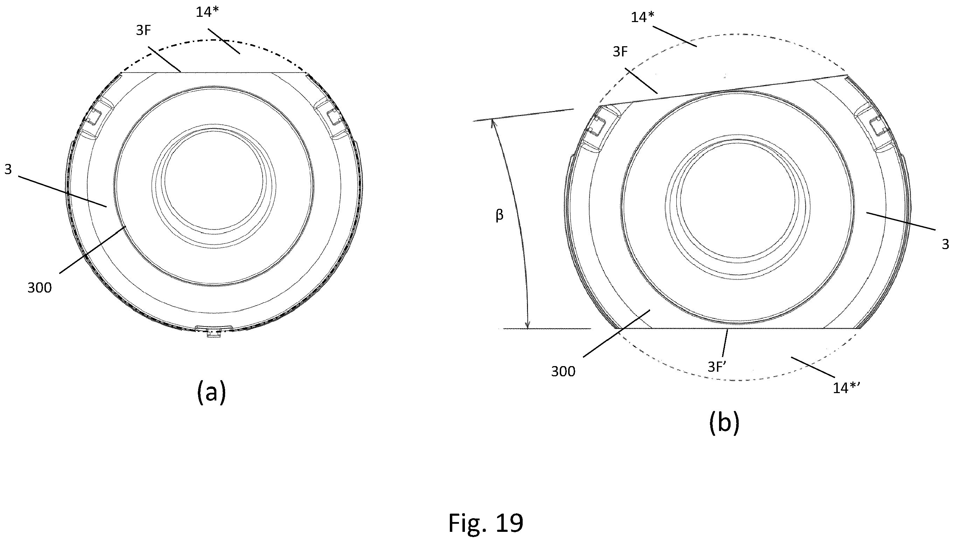

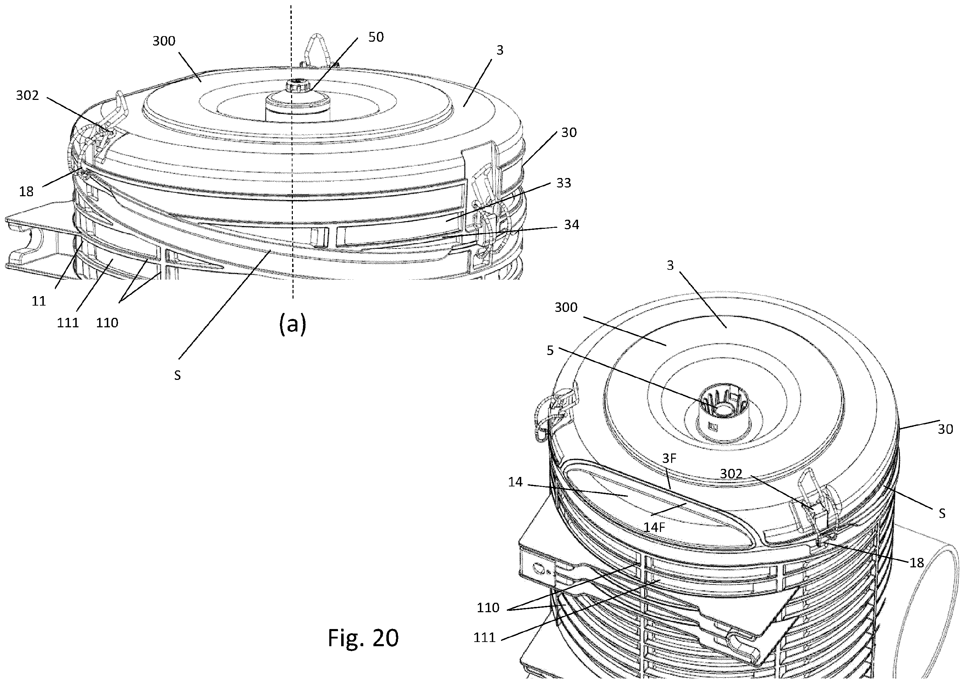

Fig. 18 (a) (b), Fig. 19 (a) (b) and Fig. 20 (a) (b) illustrate features of housing covers for use with any of the embodiments of the present disclosure.

Fig. 18 (b) illustrates that a housing cover 3 can be flat. It can further comprise a disclosed flat section 3F (interrupted or straight) for alignment and other disclosed purposed.

Fig. 18 (a) illustrates a housing cover 3 which has been disclosed for instance in relation with Fig. 8, Fig. 10-12 and 17, comprising an upper or outer surface 300 oriented along a plane P1 which is perpendicular onto a housing cover axis. A lower rim 30r of the sidewall 30 of the housing cover 3 is arranged along a second plane P2, which is slanted with respect to a plane perpendicular onto the housing cover axis. The angle α between both planes can for instance be between 10° and 45°, more preferably between 5° and 30°.

Fig. 19 (a) represents a top view of a housing cover 3 according to embodiments of the present disclosure, having a single flat 3F. A virtual complement to the housing cover 14* has been marked in dotted line, which corresponds to an undercut section 14 in an associated housing.

Fig. 19 (b) represents a top view of a housing cover 3 according to embodiments of the present disclosure, having a two flats 3F and 3F'. Virtual complements 14*, 14*' to the housing cover have been marked in dotted line, which corresponds to respective undercut sections 14, 14' in an associated housing. The flats 3F and 3F' may be parallel or can be under an angle β.

Fig. 20 illustrates an advantageous configuration for the disclosed housing cover 3 and filter assemblies, wherein a sensor port 5 with for instance a pressure sensor 50 is provided centrally in the housing cover 3, and a small associated opening towards the clean side of the filter assembly. It is an advantage that the pressure sensor can be visually inspected on the servicing side of the housing 1, as there exists an access to the clean side.

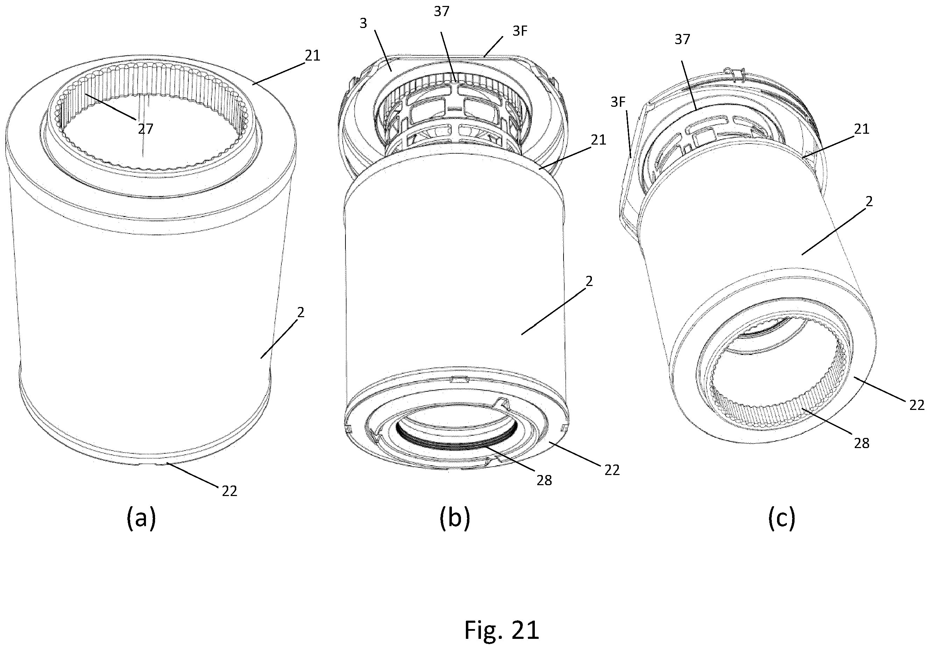

Fig. 21 to 24 illustrate some examples of first and second circumferential seal configurations, and associated sealing surfaces on the housing cover and housing.

One or both of the first and second circumferential seals 27 and 28 can have a rotationally symmetric profile, or can comprise a rotational asymmetry. The same applies to their corresponding sealing surfaces 37 and 19.

Both circumferential seals 27 and 28 and their corresponding sealing surfaces 19 and 37 can for instance be adapted for rotational positioning and locking of the filter element with respect to the housing or with respect to the housing cover.

For instance, as illustrated in Fig. 21 (a) and (b), the first circumferential seal 27 and corresponding sealing surface 37 can comprise a gear type configuration, as described for instance in EP3413993. The second circumferential seal 28 can for instance be a rotational symmetric radially (inwardly or outwardly) directed seal for sealing on a second circumferential sealing surface 19 which is cylindrical.

Fig. 21 (c) illustrates another embodiment, wherein the first circumferential seal 27 comprises a rotational symmetric radially (inwardly or outwardly) directed seal for sealing on a first circumferential sealing surface 37 which is cylindrical. The second circumferential seal 28 can comprise an inwardly directed gear type configuration, as described for instance in EP3413993. The second circumferential sealing surface 19 can have an outwardly directed corresponding gear type configuration, as described for instance in EP3413993.

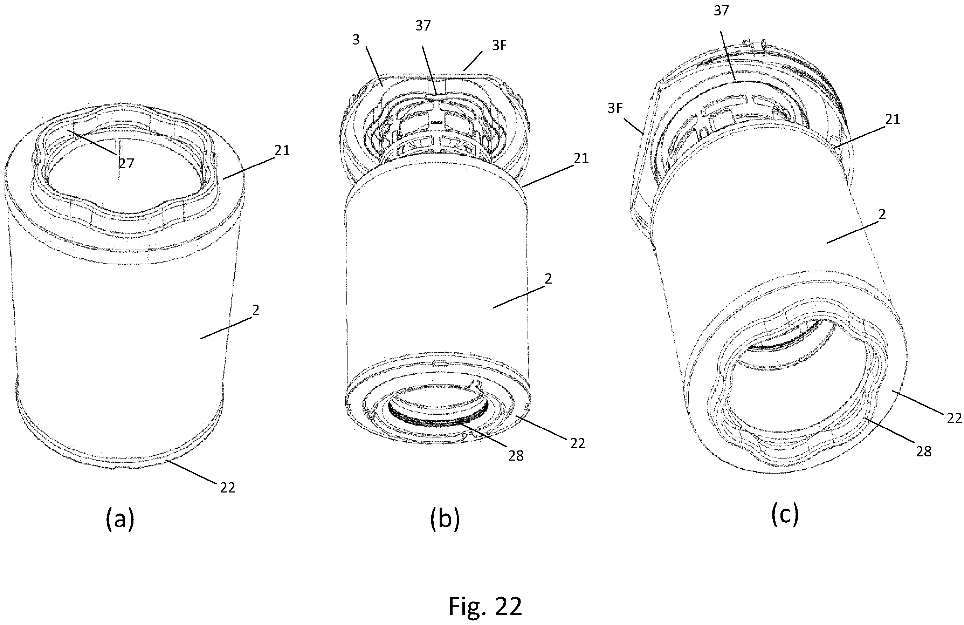

For instance, as illustrated in Fig. 22 (a) and (b), the first circumferential seal 27 and corresponding sealing surface 37 can comprise a flower type configuration, as described for instance in EP2771092. The second circumferential seal 28 can for instance be a rotational symmetric radially (inwardly or outwardly) directed seal for sealing on a second circumferential sealing surface 19 which is cylindrical.

Fig. 22 (c) illustrates another embodiment, wherein the first circumferential seal 27 comprises a rotational symmetric radially (inwardly or outwardly) directed seal for sealing on a first circumferential sealing surface 37 which is cylindrical. The second circumferential seal 28 can comprise an inwardly directed flower type configuration, as described for instance in EP2771092. The second circumferential sealing surface 19 can have an outwardly directed corresponding gear type configuration, as described for instance in EP277109.

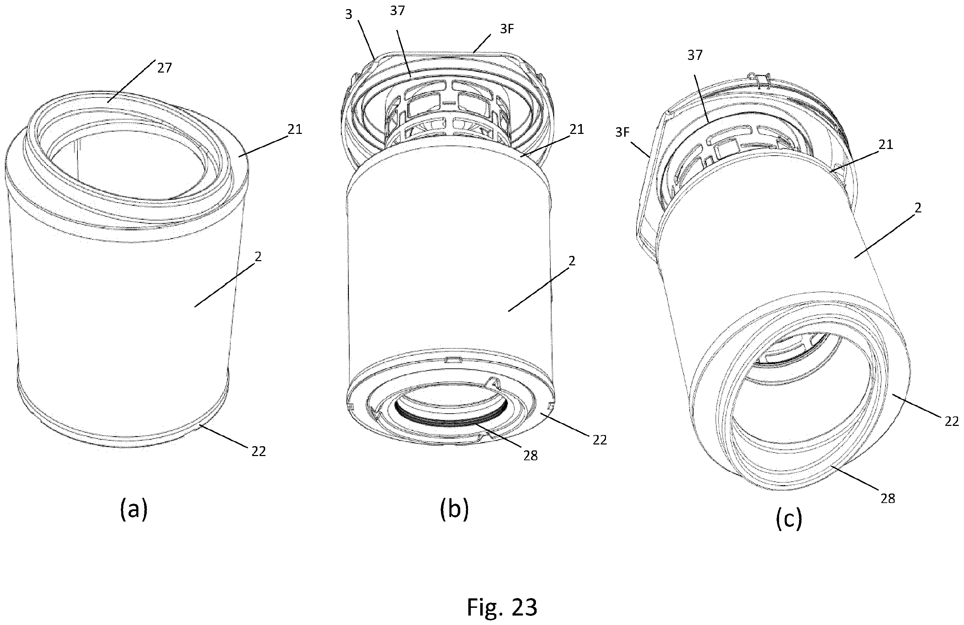

Fig. 23 (a) and (b) discloses a further embodiment, wherein the first circumferential seal 27 and the corresponding first circumferential sealing surface 37 are oval. The second circumferential seal 28 can for instance be a rotational symmetric radially (inwardly or outwardly) directed seal for sealing on a second circumferential sealing surface 19 which is cylindrical.

Fig. 23(c) illustrates a further embodiment, wherein the first circumferential seal 27 comprises a rotational symmetric radially (inwardly or outwardly) directed seal for sealing on a first circumferential sealing surface 37 which is cylindrical. The second circumferential seal 28 can for instance be a radially (inwardly or outwardly) directed oval seal for sealing on a corresponding oval second circumferential sealing surface 19.

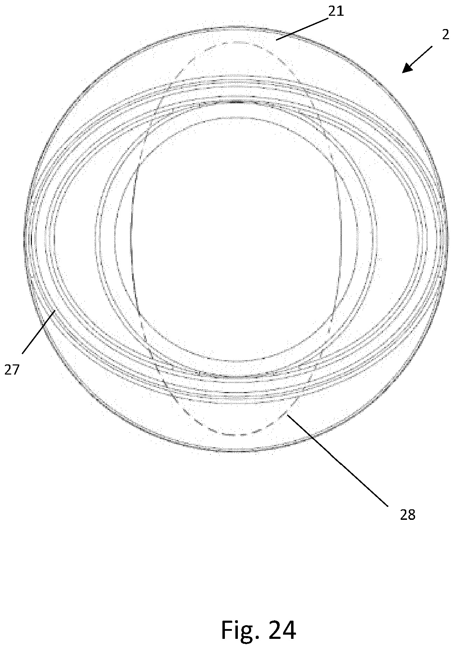

Fig. 24 is a projected view of another embodiment of the present disclosure, which is in a way a combination of the embodiments of Fig 23 (a) (b) and (c), wherein both first and second circumferential seals 27, 28 are oval and are sealing on corresponding oval sealing surfaces 37, 19. The oval shapes may have main axes that are under an angle, for instance an angle of 90° or an angle between 15° and 19°.

Generally, it is an advantage to have the first seal 27 and second seal 28 of different shape, for which examples have been described in relation with Fig. 21 (a) to (c), Fig. 22 (a) to (c) and Fig. 23 (a) to (c), as it will allow the user to install the cone in the right direction. Installing the cone in the reversed direction may cause damage to the filter element.

Other combinations of the disclosed first and second circumferential seals 27, 28 and their corresponding sealing surfaces 37, 19 can be thought of and are supposed to be disclosed.

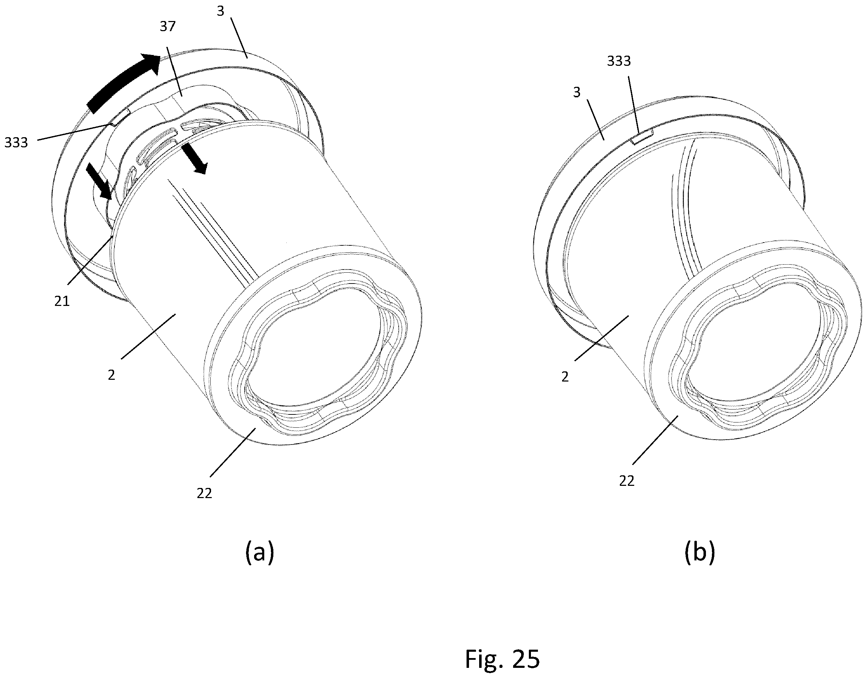

In embodiments wherein both the first and second circumferential seal have respective rotational locking functionality with respect to the longitudinal axis of the filter element or filter housing, and wherein the filter media pack 20 of the filter element is flexible, advantageous configurations of the filter assembly are provided, wherein the tubular filter media pack is twisted and therefor comprises relatively more media per housing internal volume. Such a configuration of the assembly can be achieved as follows. The second circumferential seal 28 and thus second end cap 22 can be inserted in the housing 1 in a fixed/locked angular position with respect to the housing 1 (e.g. with respect to the housing outlet 12). The filter element is longer than the housing cavity and protrudes from the servicing opening 13. The first circumferential seal 27 is then coupled with the (sealing surface 37 of the) housing cover 3, in a fixed/locked angular position with respect to the cover 3. The one or more flats 3F,3F' of the cover 3 and one or more complementary undercut sections 14, 14' of the housing inlet 13 can then be aligned by rotating the cover with respect to the housing over a predetermined angle, thereby twisting the media pack 20 in a predetermined manner and shortening it such that the filter element 2 fits the housing cavity again and the housing cover can be closed. This principle is schematically illustrated in Fig. 25. Fig. 25 also illustrates an example of a locking mechanism 333 of a housing cover 3 to the housing 1 for use with embodiments of the present disclosure, which can be for instance of the bayonet type or any other state of the art type.

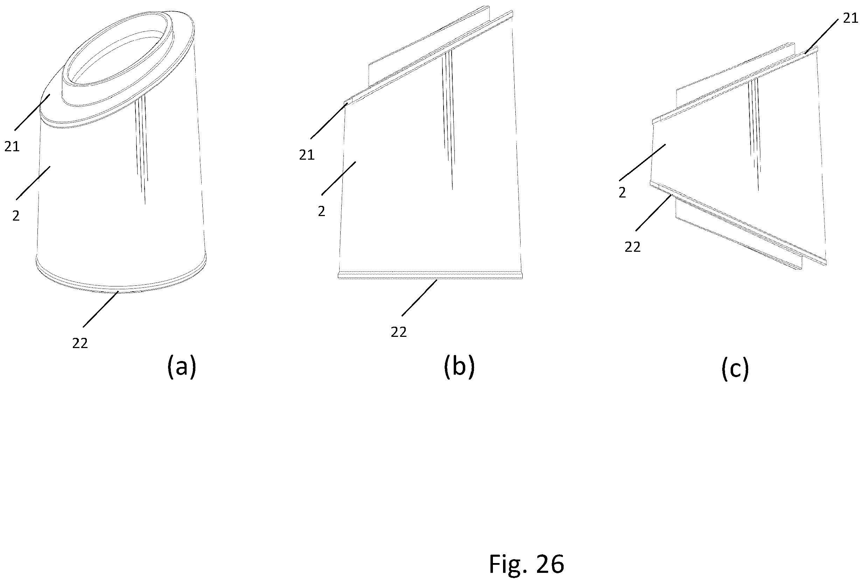

Fig. 26 (a) (b) (c) illustrate further preferred embodiments of filter elements of the present disclosure in which the first and/or second end cap 21, 22 and their corresponding circumferential seals 27, 28 are slanted with respect to a plane perpendicular to the longitudinal axis of the filter element 2 / filter media pack 20.

In Fig. 26 (a) (b) the second end cap 22 is perpendicular on the filter axis, while the first end cap 21 is slanted with respect to a plane perpendicular to the longitudinal axis. The respective circumferential seals 27, 28 are oriented along the planes defined by the end caps 21, 22.

In Fig. 26(c) both first end cap 21 and the second end cap 22 are slanted with respect to a plane perpendicular to the longitudinal axis. The respective circumferential seals 27, 28 are oriented along the planes defined by the end caps 21,22.

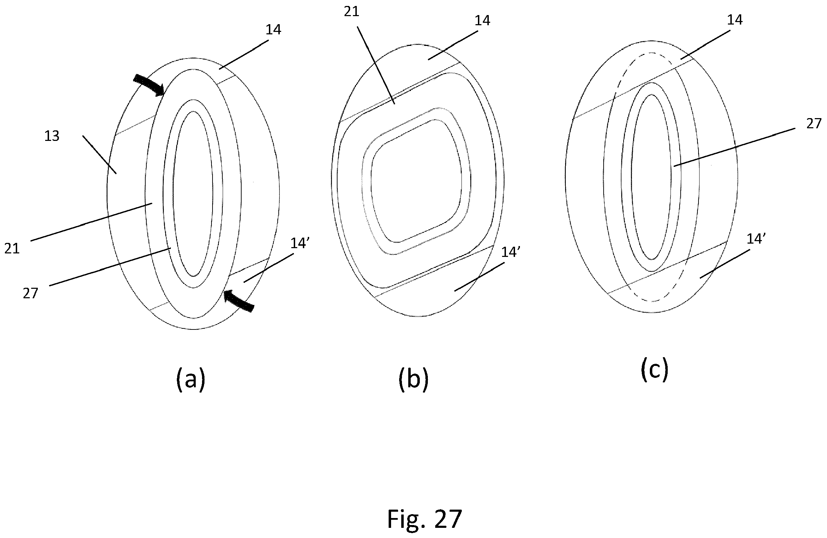

Fig. 27 (a) to (c) illustrate the aspects of elastic deformation of a filter element first end cap 21 according to aspects of the present disclosure, in a projected view along the filter element axis. The filter media pack and first circumferential seal 27, as well as the central opening of the filter media pack 20 are oval. The servicing opening 13 is oval but mainly due to the presence of two undercut sections 14,14' at opposed sides of the servicing opening, the first end cap 21 is not able to pass the inlet opening 13 without deformation. In Fig. 27(b) the first end cap 21 (including the first circumferential seal 27) and media pack are elastically deformed such that the second end cap 21 can pass the servicing opening in the deformed state. In Fig. 27 (c) the filter element 2 has passed the servicing opening 13 and returns elastically to its initial configuration, and occupies space below the undercut sections 14, 14'.

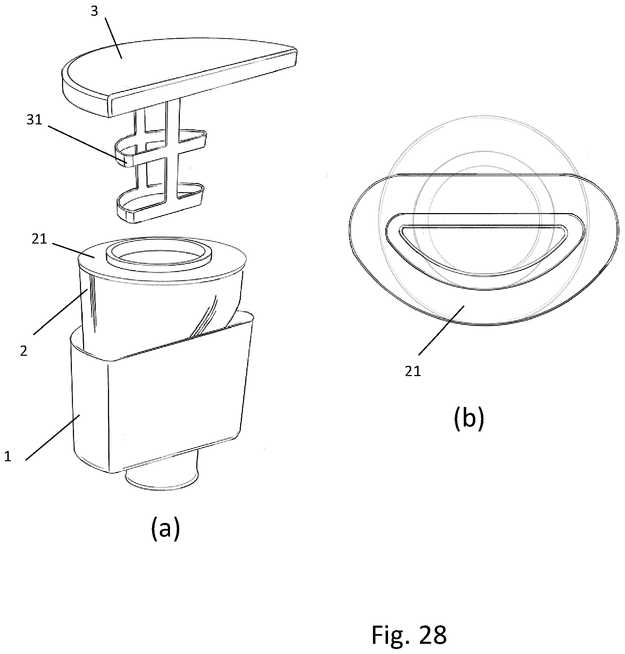

Fig. 28 (a) (b) illustrate a further preferred embodiment of the present disclosure, wherein a filter media pack 20 is deformed by the media support structure 31 protruding from the housing cover 3. The filter element 2 is elastically deformable and has a cylindrical or conical shape. It is inserted into a filter housing 1, the sidewall of which has a different shape (e.g., constant cross-section, D-shape in projection). The servicing opening 13 has for instance the same shape as the housing cross-section. The elastically deformable filter element 2 is inserted in the housing 1 and guided in its deformation by the sidewalls of the servicing opening and of the housing. After installation, the elastically deformable filter element 2 has been adapted or has taken the form of the filter housing volume. Then, the filter media support means or tower protruding from the housing cover 3 is inserted into the interior of the filter media pack 20 to support it from the inside, when the housing cover 3 is placed on the housing 1.

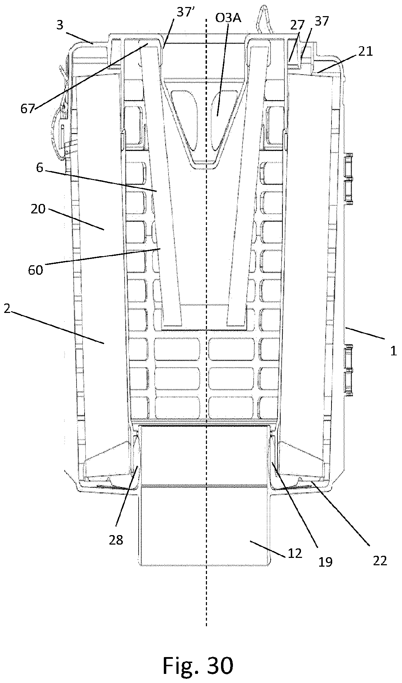

Fig. 29 (a) and Fig. 30 illustrate a sixth preferred embodiment of the present disclosure, which comprises a first and a second main filter element 2, 6), the second filter element 6 not being a safety filter element but filtering unfiltered air flow in parallel with the first filter element 2. The cover 3 comprises a second circumferential sealing surface 37' arranged on the inner surface 301 for receiving a further circumferential seal 67 of the second filter element 6, arranged radially within the first circumferential sealing surface 37. The cover further comprises one or more for instance centrally positioned inlet openings O3A in the axial end wall of the housing cover 3, positioned radially within the second circumferential sealing surface 67. The second filter element is for instance conical, comprises a tubular arrangement or pleated media and has a closed end cap at the opposed side of the seal 67. Air entering the openings O3A is then filtered by the second filter element 6 before it enters the clean are side of the first filter element and leaves the filter assembly through the outlet 12.

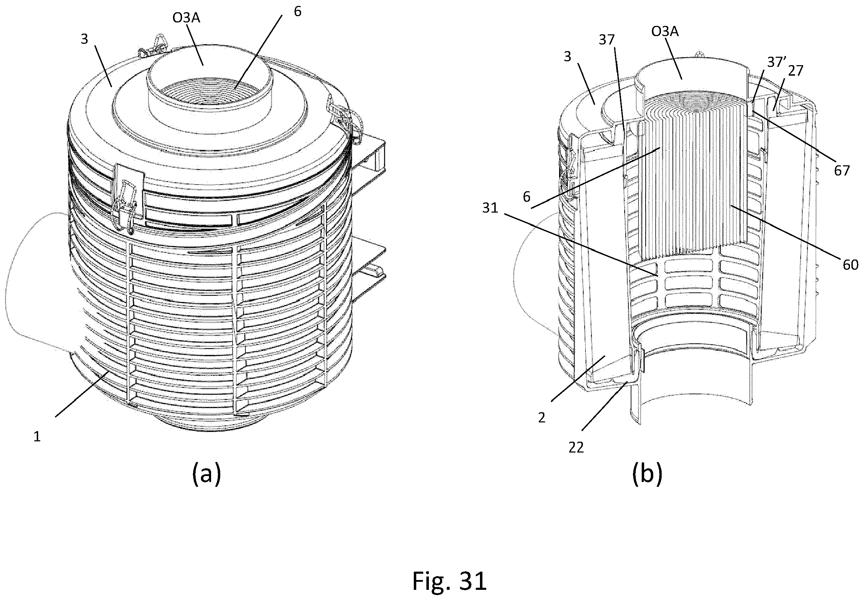

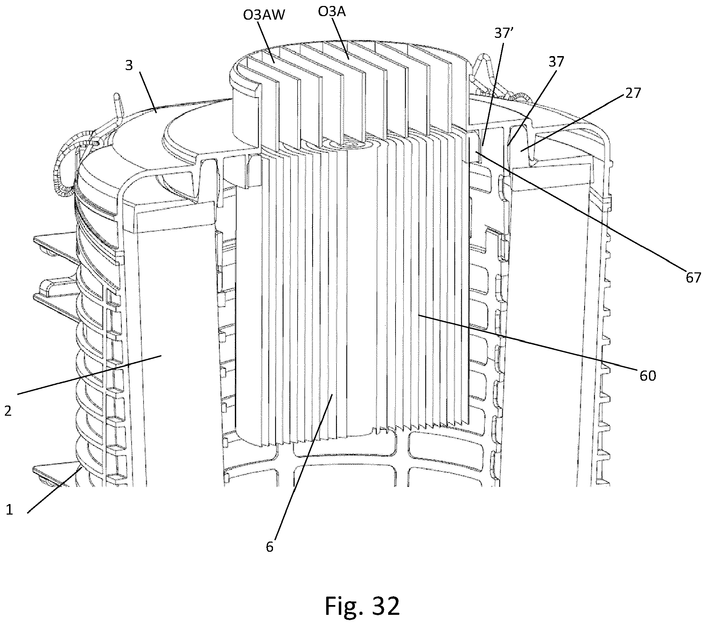

Fig. 31 (a) (b) and Fig. 32 illustrate variants of the sixth preferred embodiment of the present disclosure. In Fig. 31(a) (b) a second filter element 6 comprising media 60 of the fluted media type, for instance wound fluted media, is provided. The cover comprises one centrally positioned inlet opening O3A in the axial end wall of the housing cover 3, positioned radially within the second circumferential sealing surface 67. Air entering the opening O3A is then filtered by the second, fluted filter element 6 before it enters the clean are side of the first filter element 2 and leaves the filter assembly through the outlet 12. Fig. 32 is a variant wherein the inlet opening O3A further comprises a vane or waffle arrangement O3AW comprising air flow guiding ribs that allow to increase the uniformity of the incoming air stream. The flow guiding ribs are preferably parallel to the axis of the fluted media pack 60.

Fig. 29 (b) illustrates a seventh preferred embodiment of the present disclosure. The cover 3 comprises one or more, for instance centrally positioned axial end wall outlet openings O3B, positioned radially within the first circumferential sealing surface 37 and first circumferential seal 27. The outlet openings O3B thereby form a second outlet 12' for clean air of the housing 1, that can be directed to a second air consuming means such as for instance a compressor.

Fig. 33 illustrates a variant of the seventh preferred embodiment, wherein a single, centrally positioned second outlet opening O3B is provided. The outlet opening O3B can for instance be part of a second outlet tube of the housing 1 (in the outlet cover 3).

Figures 34 (a) to (c) illustrate variants of the seventh preferred embodiment of the present disclosure. It comprises a single, centrally positioned second outlet opening O3B as for the embodiments of Fig. 33. It further comprises a set of openings 33t in the housing cover 3, circumferentially distributed over a peripheral area of the housing cover 3, radially outside of the first circumferential sealing surface 37. One or more or all of the openings 33t of the set extend from the axial end surface of the housing cover to the radial sidewall 30 of the housing cover 3. The openings then serve as an additional air inlet for the filter assembly. The radial sidewall 30 of the housing cover 3 may further also comprise openings 33, optionally defined in a grid structure, e.g. between flow guiding means or devices 34 such as ribs, fins or blades, also as inlet openings, as explained before.

Fig. 35 illustrates the advantageous packaging associated with filter element 2 associated with the present disclosure. An elastically deformable filter element 2 can be maintained in a deformed state within a packaging container 9 such as in a (e.g. cardboard) box, bag or sleeve. It can also be maintained in a deformed state by a retention means (not depicted) and then inserted in the packaging container 9. For instance, it can be maintained in a deformed state by an elastic or -on- elastic rope or band before insertion into the packaging container 9 through an insertion opening 90. In preferred embodiments, the packaging container 9 is strong enough and adapted to deform all or only some pieces of the filter element 2 (such as any selection of first end cap 21, filter media pack 20, second end cap 22) when the filter element 2 is inserted in the packaging container 9.

Fig. 36 illustrates the integration of a dust evacuation valve 3V on the at least one undercut 14. In this case the undercut section 14 is positioned at a lower end of the housing inlet opening when the air filter housing is in use.

Fig. 37 (a) and (b) illustrate examples of a first end cap with manipulation means.

Fig. 37(a) illustrates an embodiment wherein a protruding structure 270 that surrounds a central opening of the first end cap and supports or forms a first, preferably inwardly directed, circumferential radial seal 27, also comprises handle portions 271 extending radially outwardly from the rest of the structure 270, the handle portions being shaped for being gripped by human adult fingers.

FIG. 37 (b) illustrates another embodiment, wherein a protruding structure 270 that surrounds a central opening of the first end cap and supports or forms a first, e.g. inwardly directed, circumferential radial seal 27, further comprises a radially extending flap 275 which extends parallel to the outer surface of the first end cap 21. The flap 275 comprises one or two hook portions 274 which are adapted for hooking behind ribs or fins 14r arranged on the housing, preferably arranged on an undercut section 14, for instance parallel to the flat 14F.

For instance, the following could be claimed:
1. A filter element comprising a flexible filter media pack arranged in a tubular manner around an axis, a first open end cap connected to a first axial end of the filter media pack in a fluid tight manner, and a second open end cap connected to a second axial end of the filter media pack in a fluid tight manner, characterised in that the first end cap is flexible and can non-destructively be deformed, for instance between a first shape and a different second shape.
2. A filter element according to item 1, wherein a minimal radial cross-dimension of the second shape of the first open end cap is at least 5%, or at least 10%, or at least 15%, or at least 20%, or at least 25%, or at least 30 %, or at least 40%, or at least 50%, or at least 75% smaller than a minimal radial cross-dimension of the first shape.
3. A filter element according to item 1 or 2, wherein the first end cap is elastically deformable.
4. A filter element according to any of the previous items, wherein the first end cap is connected to the filter media and possibly manufactured by potting.
5. A filter element according to any of the previous items, wherein the first end cap comprises a first circumferential seal, preferably formed integrally with the first end cap.
6. A filter element according to item 5, wherein the first circumferential seal comprises an N-fold, for instance a 1-fold rotational symmetry with respect to the filter media pack axis.
7. A filter element according to item 5 or 6, wherein the first circumferential seal is arranged along a slanted plane with respect to a plane perpendicular to the filter media pack axis.
8. A filter element according to any of the previous items, wherein the first end cap can be deformed in a radial direction by radial force components which are smaller than 40 N.
9. A filter element according to any of the previous items, wherein the first end cap further comprises at least one manipulation means such as a handle, adapted and arranged or pulling a portion of the first end cap radially inwardly.
10. A filter element according to item 9, wherein the manipulation means comprises a handle bar or structure which is bridging opposite sides of the open end cap over a central opening in the first end cap.
11. A filter element according to any of item 9 or 10, wherein the manipulation means comprises at least one radially inwardly or outwardly directed flap or ear structure.
12. A filter element according to any of the previous items, wherein the filter media pack is of the cone-type, i.e. arranged in a conical manner, wherein the cross-section of the respective cone is decreasing from the first axial end of the media pack to the second axial end of the media pack, and wherein the second end cap has a smaller diameter outer diameter than the first end cap.
13. A filter element according to any of the previous items, wherein the second end cap is flexible and can non-destructively be deformed, for instance between a first shape and a different second shape.
14. A filter element according to any of the previous items, wherein a minimal radial cross-dimension of the second shape of the second open end cap is at least 5%, or at least 10%, or at least 15%, or at least 20%, or at least 25%, or at least 30 %, or at least 40%, or at least 50%, or at least 75% smaller than a minimal radial cross-dimension of the first shape.
15. A filter element according to any of the previous items, wherein the second end cap can be deformed in a radial direction by radial force components which are smaller than 40 N.
16. A filter element according to any of the previous items, wherein the second end cap is elastically deformable.
17. A filter element according to any of the items 1 to 15, wherein the second end cap is substantially rigid.
18. A filter element according to any of the previous items, wherein the second end cap comprises a second circumferential seal, preferably formed integrally with the second end cap.
19. A filter element according to item 18, wherein the second circumferential seal comprises an N-fold, for instance a 1-fold rotational symmetry with respect to the filter media pack axis.
20. A filter element according to item 18 or 19, wherein the second circumferential seal is arranged along a slanted plane with respect to a plane perpendicular to the filter media pack axis.
21. A filter element according to any of items 18 to 20, wherein the second open end cap comprises a central opening and wherein the second circumferential seal is embodied as a radially inwardly into the central opening extending portion of the second end cap, the radially inwardly extending portion comprising at least one axially extending circumferential, for instance V- or U-shaped, groove, trench or recess arranged adjacent to the central opening, the groove, trench or recess projecting into an inner volume of the filter media pack, preferably in a direction parallel to the axis of the filter media pack.
22. A filter element according to any of the previous items, wherein the filter media pack comprises pleated media, and wherein the media comprises one or more layers selected from the group of media layers and support layers.
23. A filter element according to any of the previous items, comprising a filter media pack which is self-supporting.
24. A package comprising a box, bag or sleeve comprising a filter element according to any of the previous items, wherein the filter element is kept in an elastically deformed configuration by an inner sidewall of the box, bag or sleeve.
25. A filter assembly comprising a filter housing having a housing axis and a filter element according to any of the previous items 1 to 23, the filter housing comprising a filter insertion opening (or servicing opening), wherein the filter insertion opening is too small for inserting the first end cap into the filter housing in the first shape of the first end cap and large enough for inserting the first end cap into the filter housing in the second shape of the first end cap.
26. A filter assembly according to items 25, wherein said insertion opening comprises at least one undercut section and wherein a projection of the filter element along the housing axis intersects a projection of the undercut section along the housing axis, said intersection corresponding to a projected overlap area.
27. A filter assembly according to item 26, wherein the projected overlap area is more than 1%, more than 2%, more than 3%, more than 5%, more than 10% of the projected area of the filter element along the housing axis.
28. A filter assembly according to any of items 25 to 27, wherein the housing comprises a housing cover for covering the insertion opening, and wherein the housing cover is substantially complementary or complementary shaped with respect to the one or more undercut sections.
29. A filter assembly housing according to any of items 25 to 28, further comprising a housing cover for covering the insertion opening, wherein the housing cover and filter housing are adapted such that they meet along a slanted plane, the slanted plane being such that a housing length of the housing at a side corresponding to the partial overlap area is longer than a housing length at an opposed side of the housing.
30. A filter assembly housing according to item 25 or 29, further comprising a housing cover, the housing cover comprising a filter media pack inner support structure, such as a tower structure, preferably having conical shape, protruding from an inner surface from proximate end at the cover to towards a distal end.
31. A filter assembly according to item 25 or 30, comprising a housing cover, wherein the housing cover comprises a pressure sensor mount and optionally pressure sensor.
32. A filter assembly according to any of items 25 to 31, comprising a housing cover, wherein the housing cover comprises a sealing surface for receiving the first circumferential seal in a sealing manner when the cover is mounted on the filter housing.
33. A filter assembly according to any of items 25 to 32, wherein the filter housing comprises a housing cover and the filter housing comprises a first end and a second end, the first end comprising the filter insertion opening and being adapted for receiving the cover, the second end arranged at an opposite end of the first end and comprising an outlet opening, and the second end further comprising a sealing surface complementary to the second circumferential seal, for receiving the second circumferential seal in a sealing manner.
34. A filter assembly according to any of items 25 to 33, wherein the filter element is dependent on item 21, and wherein the cover is dependent on item 30, wherein the distal end of the support structure is arranged and adapted for being received by the axially extending circumferential, for instance V- or U-shaped, groove, trench or recess of the second circumferential seal of the filter element, and for providing a radially outward backing pressure to the circumferential seal towards the sealing surface of the filter housing, when the cover is mounted on the housing.
35. A filter assembly according to any of items 25 to 34 wherein the housing further comprises at least one partial volume for receiving a portion of the first end cap within the housing, the partial volume being arranged below, preferably directly below or adjacent, an undercut section within the housing, preferably adjacent to the insertion opening.
36. A filter assembly according to any of item 25 to 35, wherein the filter media pack of the filter element is installed in a twisted configuration.
37. A filter assembly according to any of items 25 to 36, wherein the housing comprises a housing sidewall arranged generally along an outer radial surface of the filter media pack which is open and comprises a grid structure.
38. A filter assembly according to any of items 25 to 37, wherein a radial sidewall of the cover is open and comprises a grid structure.
39. A filter assembly according to any of items 37 or 38, wherein the at least one of the grid structures comprises one or more flow guiding means.
40. A filter housing comprising an inlet and an outlet and adapted for receiving a replaceable filter element in a sealing manner, such that air passing from an inlet of the housing to an outlet of the housing is filtered by said filter element, said housing comprising a servicing opening for receiving said filter element in a main part of said housing and said housing comprising a housing cover, for closing of said service opening, wherein said inlet of said housing is provided in said main part and/or housing cover, and wherein said inlet comprises a grid-like inlet structure.
41. A filter housing according to item 40, wherein said housing comprises a housing sidewall arranged generally along an outer radial surface of the filter media pack when installed in said housing, and said outer radial surface comprises a grid structure.
42. A filter housing according to item 40 or 41, wherein a radial sidewall of the cover comprises a grid structure.
43. A filter housing according to any of items 40 to 42, wherein at least one of the grid structures of cover or housing sidewall comprises one or more flow guiding means such a flow guiding ribs, fins or vanes.
44. A filter housing according to any of items 40 to 44, wherein said housing main part and/or housing cover comprises plastic.
45. A filter housing according to any of items 40 to 45, wherein said housing main part and/or housing are formed by injection moulding.

For instance, also the following could be claimed:
1. A filter element comprising a flexible filter media pack arranged in a tubular manner around an axis, a first open end cap connected to a first axial end of the filter media pack in a fluid tight manner, and a second open end cap connected to a second axial end of the filter media pack in a fluid tight manner, wherein the second open end cap comprises a central opening and a second circumferential seal comprising a radially inwardly into the central opening extending portion of the second end cap, the radially inwardly extending portion comprising at least one circumferential groove, trench or recess arranged adjacent to the central opening, the groove, trench or recess projecting into an inner volume of the filter media pack.
2. A filter element according to item 1, wherein the circumferential groove, trench or recess is oriented in a direction parallel to the axis of the filter media pack.
3. A filter element according to any of the previous items, wherein the filter media pack is of the cone-type, i.e. arranged in a conical manner, wherein the cross-section of the respective cone is decreasing from the first axial end of the media pack to the second axial end of the media pack, and wherein the second end cap has a smaller diameter outer diameter than the first end cap.
4. A filter element according to any of the previous items, wherein the second end cap is flexible and can non-destructively be deformed, for instance between a first shape and a different second shape.
5. A filter element according to item 4, wherein a minimal radial cross-dimension of the second shape of the second open end cap is at least 5%, or at least 10%, or at least 15%, or at least 20%, or at least 25%, or at least 30 %, or at least 40%, or at least 50, or at least 75% smaller than a minimal radial cross-dimension of the first shape.
6. A filter element according to any of the previous items, wherein the second end cap can be deformed in a radial direction by radial force components which are smaller than 30 N.
7. A filter element according to any of the previous items, wherein the second end cap is elastically deformable.
8. A filter element according to any of the items 1 to 3, wherein the second end cap is substantially rigid.
9. A filter element according to any of the previous items, wherein the second circumferential seal is formed integrally with the second end cap.
10. A filter element according to any of the previous items, wherein the second circumferential seal comprises an N-fold, for instance a 1-fold rotational symmetry with respect to the filter media pack axis.
11. A filter element according to item 10, wherein the second circumferential seal comprises at least one lobe which protrudes radially.
12. A filter element according to item 10, wherein the second circumferential seal comprises at least one lobe which protrudes axially.
13. A filter element according to any of the previous items, wherein the second circumferential seal is arranged along a slanted plane with respect to a plane perpendicular to the filter media pack axis.
14. A filter element according to any of the previous items, wherein the filter media pack comprises pleated media, and wherein the media comprises one or more layers selected from the group of media layers and support layers.
15. A filter element according to any of the previous items, wherein the second end cap is connected to the filter media by potting and possibly manufactured by potting.
16. A filter assembly comprising a filter housing having a housing axis and a filter element according to any of the previous items 1 to 15, arranged into the housing along the housing axis, the filter housing comprising a housing cover, the housing cover comprising a filter media pack inner support structure, such as a tower structure, preferably having conical shape, protruding from an inner surface from proximate end at the cover to towards a distal end, wherein filter housing comprises a first end and a second end, the first end comprising a filter insertion opening and being adapted for receiving the cover, the second end arranged at an opposite end of the first end and comprising an outlet opening, and the second end further comprising a sealing surface complementary to the second circumferential seal, for receiving the second circumferential seal in a sealing manner.
17. A filter assembly according to item 16, wherein the distal end of the support structure is arranged and adapted for being received by the axially extending circumferential groove, trench or recess of the second circumferential seal of the filter element, and for providing a radially outward backing pressure to the circumferential seal towards the sealing surface of the filter housing, when the cover is mounted on the housing.
18. A filter assembly according to any of items 16 to 17, in as far as dependent on item 11, wherein the distal end of the support structure comprises at least one radially protruding lobe corresponding to the at least one radially protruding lobe of the second circumferential seal.
19. A filter assembly according to any of items 16 to 18, in as far as dependent on item 12, wherein the distal end of the support structure comprises at least one axially protruding lobe corresponding to the at least one axially protruding lobe of the second circumferential seal.

For instance, also the following could be claimed:
1. A housing cover for a filter housing, comprising an axial end wall connected to a circumferential sidewall arranged around a longitudinal axis, wherein a projection of said axial end wall along said longitudinal axis on a plane perpendicular thereto comprises a 1-fold rotational symmetry around said longitudinal axis.
2. A housing cover according to item 1, comprising an axial end wall connected to a circumferential sidewall arranged around a longitudinal axis and the cover defining a lower rim of the sidewall surrounding a housing interfacing opening, wherein the circumferential sidewall is interrupted (or comprises one or more, e.g. annular, gaps) or is straight or is substantially straight within one or more angular ranges about the longitudinal axis.
3. A housing cover according to item 1 or 2, wherein a contour of the axial end wall generally corresponds to one or more subsequent sections of a predetermined circle shape, connected by one or more chord lines of the circle shape between adjacent circle sections, and wherein the circumferential sidewall is interrupted or straight in the region corresponding to the chord lines.
4. A housing cover according to any of the previous items, further comprising a sensor port opening in the axial end wall.
5. A housing cover according to to any of the previous items, comprising an inner surface and a circumferential sealing surface arranged on the inner surface for receiving a filter element seal.
6. A housing cover according to item 5, wherein the circumferential sealing surface is axially protruding from the axial end wall on the inner surface.
7. A housing cover according to any of items 5 or 6, wherein the circumferential sealing surface comprises an N-fold rotational symmetry.
8. A housing cover according to any of the previous items, further comprising one or more axial end wall openings in the axial end wall.
9. A housing cover according to item 8, comprising one or more, for instance centrally positioned axial end wall outlet openings, positioned radially within the circumferential sealing surface.
10. A housing cover according to any of the previous items, comprising a second circumferential sealing surface arranged on the inner surface for receiving a second filter element seal, arranged radially within the first circumferential sealing surface, and one or more for instance centrally positioned axial end wall inlet openings, positioned radially within the second circumferential sealing surface.
11. A housing cover according to item 10, wherein the second circumferential sealing surface comprises an N-fold rotational symmetry.
12. A housing cover according to any of the previous items, further comprising a filter media support structure protruding axially or mainly axially from the inner surface from the axial end wall.
13. A housing cover according to item 12, wherein the media support structure comprises a tower structure, preferably a conical tower structure, which extends axially from a proximal end at the inner surface of the cover to a distal end away from the cover.
14. A housing cover according to item 13, wherein the distal end of the tower structure comprises an N-fold rotational symmetry around the longitudinal axis.
15. A housing cover according to any of the previous items, wherein the lower rim is defined by a plane which is slanted with respect to a direction perpendicular to the longitudinal axis.
16. A housing cover according to item 15, wherein the axial end wall is arranged perpendicular to the longitudinal axis, and the circumferential sidewall evolves between a minimal width at a minimal axial distance between the lower rim to the axial end wall to a maximal width at a maximal axial distance between the lower rim to the axial end wall.
17. A housing cover according to any of the previous items, wherein the housing sidewall comprises one or more housing cover sidewall openings.
18. A housing cover according to any of the previous items 2 to 17, further comprising at least a sub-component of a cover closing means or device arranged at or adjacent to the location where said circumferential sidewall is interrupted (or comprises one or more gaps) or is straight or substantially straight.
19. An assembly comprising a main housing having a servicing opening for receiving a filter element into the housing and a housing cover for covering the servicing opening according to any of the previous items, wherein the servicing opening comprises at least one undercut section which are complementary to the interruptions or straight sections of the housing cover when the cover is placed on the main housing.

For instance, also the following could be claimed:
1. A housing cover for a filter housing comprising an axial end wall connected to a circumferential sidewall arranged around a longitudinal axis, and defining a lower rim of the sidewall surrounding a filter housing interfacing opening, wherein the lower rim is defined by a plane which is slanted with respect to a direction perpendicular to the longitudinal axis.
2. A housing cover according to item 1, wherein the axial end wall is arranged perpendicular to the longitudinal axis, and the circumferential sidewall evolves between a minimal width at a minimal axial distance between the lower rim to the axial end wall to a maximal width at a maximal axial distance between the lower rim to the axial end wall.
3. A housing cover according to any of the previous items, wherein the housing sidewall comprises one or more housing sidewall openings.
4. A housing cover according to any of the previous items, further comprising a sensor port opening in the axial end wall.
5. A housing cover according to item 1 to 3, comprising an inner surface and a circumferential sealing surface arranged on the inner surface for receiving a filter element seal.
6. A housing cover according to item 5, wherein the circumferential sealing surface is axially protruding from the axial end wall on the inner surface.
7. A housing cover according to any of items 5 or 6, wherein the circumferential sealing surface comprises an N-fold rotational symmetry.
8. A housing cover according to any of the previous items, further comprising one or more axial end wall openings in the axial end wall.
9. A housing cover according to item 8, comprising one or more, for instance centrally positioned axial end wall outlet openings, positioned radially within the circumferential sealing surface.
10. A housing cover according to any of the items 1 to 8, comprising a second circumferential sealing surface arranged on the inner surface for receiving a second filter element seal, arranged radially within the first circumferential sealing surface, and one or more for instance centrally positioned axial end wall inlet openings, positioned radially within the second circumferential sealing surface.
11. A housing cover according to item 10, wherein the second circumferential sealing surface comprises an N-fold rotational symmetry.
12. A housing cover according to any of the previous items, further comprising a filter media support structure protruding axially from the inner surface from the axial end wall.
13. A housing cover according to item 12, wherein the media support structure comprises a tower structure, preferably a conical tower structure, which extends axially from a proximal end at the inner surface of the cover to a distal end away from the cover.
14. A housing cover according to item 13, wherein the distal end of the tower structure comprises an N-fold rotational symmetry around the longitudinal axis.
15. A housing cover according to any of the previous items, wherein the circumferential sidewall is interrupted (or comprises one or more annular gaps) or is straight within one or more angular ranges about the longitudinal axis.
16. A housing cover according to item 15, wherein a contour of the axial end wall generally corresponds to one or more subsequent sections of a predetermined circle shape, connected by one or more chord lines of the circle shape between adjacent circle sections, and wherein the circumferential sidewall is interrupted or is straight in the region corresponding to the chord lines (defining one or more flats of the housing cover).
17. An assembly comprising a main housing having a servicing opening for receiving a filter element into the main housing and a housing cover for covering the servicing opening according to any of the previous items, wherein the servicing opening comprises a rim which lies in a plane which is slanted with respect to a direction perpendicular to a longitudinal axis of the housing cover, corresponding to the slanted plane of the lower rim of the housing cover.

## Claims

1. A filter element comprising a flexible filter media pack arranged in a tubular manner around an axis, a first open end cap connected to a first axial end of the filter media pack in a fluid tight manner, and a second open end cap connected to a second axial end of the filter media pack in a fluid tight manner, wherein the second open end cap comprises a central opening and a second circumferential seal comprising a radially inwardly into the central opening extending portion of the second end cap, the radially inwardly extending portion comprising at least one circumferential groove, trench or recess arranged adjacent to the central opening, the groove, trench or recess projecting into an inner volume of the filter media pack.

2. A filter element according to claim 1, wherein said circumferential groove, trench or recess is oriented in a direction parallel to said axis of the filter media pack.

3. A filter element according to any of the previous claims, wherein the filter media pack is of the cone-type, i.e. arranged in a conical manner, wherein the cross-section of the respective cone is decreasing from the first axial end of the media pack to the second axial end of the media pack, and wherein the second end cap has a smaller diameter outer diameter than the first end cap.

4. A filter element according to any of the previous claims, wherein the second end cap is flexible and can non-destructively be deformed, for instance between a first shape and a different second shape.

5. A filter element according to claim 4, wherein a minimal radial cross-dimension of the second shape of the second open end cap is at least 15% smaller than a minimal radial cross-dimension of the first shape.

6. A filter element according to any of the previous claims, wherein the second end cap is elastically deformable.

7. A filter element according to any of the claims 1 to 3, wherein the second end cap is substantially rigid.

8. A filter element according to any of the previous claims, wherein the second circumferential seal is formed integrally with the second end cap.

9. A filter element according to any of the previous claims, wherein the second circumferential seal comprises an N-fold, for instance a 1-fold rotational symmetry with respect to the filter media pack axis.

10. A filter element according to claim 9, wherein said second circumferential seal comprises at least one lobe which protrudes radially.

11. A filter element according to claim 9, wherein said second circumferential seal comprises at least one lobe which protrudes axially.

12. A filter assembly comprising a filter housing having a housing axis and a filter element according to any of the previous claims 1 to 11, arranged into said housing along said housing axis, the filter housing comprising a housing cover, said housing cover comprising a filter media pack inner support structure, such as a tower structure, preferably having conical shape, protruding from an inner surface from proximate end at the cover to towards a distal end, wherein filter housing comprises a first end and a second end, the first end comprising a filter insertion opening and being adapted for receiving the cover, the second end arranged at an opposite end of the first end and comprising an outlet opening, and the second end further comprising a sealing surface complementary to the second circumferential seal, for receiving the second circumferential seal in a sealing manner.

13. A filter assembly according to claim 12, wherein the distal end of the support structure is arranged and adapted for being received by the axially extending circumferential groove, trench or recess of the second circumferential seal of the filter element, and for providing a radially outward backing pressure to the circumferential seal towards the sealing surface of the filter housing, when the cover is mounted on the housing.

14. A filter assembly according to any of claims 12 to 13, in as far as dependent on claim 10, wherein said distal end of the support structure comprises at least one radially protruding lobe corresponding to said at least one radially protruding lobe of said second circumferential seal.

15. A filter assembly according to any of claims 12 to 13, in as far as dependent on claim 11, wherein said distal end of the support structure comprises at least one axially protruding lobe corresponding to said at least one axially protruding lobe of said second circumferential seal.
